(19) Europäisches Patentamt
European Patent Office
Office européen des brevets

(11) **EP 4 477 629 A1**

(12) **EUROPEAN PATENT APPLICATION**

(43) Date of publication:
**18.12.2024 Bulletin 2024/51**

(21) Application number: **24181035.7**

(22) Date of filing: **10.06.2024**

(51) International Patent Classification (IPC):
**C03C 3/06** (2006.01)　　**C03B 1/00** (2006.01)
**G03F 7/00** (2006.01)

(52) Cooperative Patent Classification (CPC):
**C03C 3/06;** C03C 2201/42; C03C 2203/42

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.06.2023 US 202363521479 P
11.07.2023 NL 2035339**

(71) Applicant: **Corning Incorporated
Corning, New York 14831 (US)**

(72) Inventors:
• **Campion, Michael John
CORNING, 14831 (US)**
• **Fiacco, Richard Michael
CORNING, 14831 (US)**
• **Hrdina, Kenneth Edward
CORNING, 14831 (US)**
• **LeBlond, Nicolas
CORNING, 14831 (US)**
• **Powers, Dale Robert
CORNING, 14831 (US)**

(74) Representative: **Arnold & Siedsma
Bezuidenhoutseweg 57
2594 AC The Hague (NL)**

(54) **TITANIA-SILICA GLASS WITH REDUCED HYDROXYL AND HALIDE CONCENTRATIONS AND METHODS OF MAKING**

(57)　A glass body that includes titania and silica, wherein an average hydroxyl concentration amongst a plurality of segments of the glass body is about 60 ppm or less, the hydroxyl concentration being measured using a Fourier transform infrared spectroscopy in transmission, and the plurality of segments including every adjacent segment across a length and a width of the glass body, the length being about 25 mm or more and the width being about 25 mm or more, and the glass body comprising a chlorine concentration of about 5 ppm or less.

100

PRODUCE SOOT PARTICLES
110

FORM MOLDED SOOT BODY
120

CONSOLIDATE THE MOLDED SOOT BODY
130

REMELT THE GLASS BODY
140

ANNEAL THE GLASS BODY
150

**FIG. 1**

EP 4 477 629 A1

**Description**

**Field**

The present disclosure is directed to titania-silica glass with reduced hydroxyl and halide concentrations and methods of making thereof, and more specifically to titania-silica glass with low concentrations of hydroxyl and of halides achieve homogenous coefficient of thermal expansion throughout the glass. The produced glass article may be suitable for use in extreme ultraviolet lithography applications.

**Background**

Extreme ultraviolet (EUV) lithography uses optics to illuminate, project, and reduce pattern images to form integrated circuit patterns. The use of extreme ultraviolet radiation is beneficial in that smaller integrated circuit features can be achieved. The optics for EUV lithography are currently made from low thermal expansion glass, such as silica-titania glass. The glass is traditionally made by a flame hydrolysis process in which high purity precursors are injected into flames to form fine glass particles that are then deposited onto a glass body.

In EUV lithography systems, the glass is typically coated with a reflective surface to form a reflective mirror or a photomask. Furthermore, the glass, in an EUV lithography system, must be able to meet stringent thermal expansion requirements in the system. Specifically, the glass must be able to maintain its surface shape (known as "figure") when subject to temperature changes in the system. A temperature stable glass is necessary to avoid any induced distortions in the wavefront characteristics of EUV projection optics.

**SUMMARY**

Embodiments of the present disclosure comprise methods to produce glass bodies that are able to advantageously maintain their figure during operation of an EUV lithography system. Therefore, the glass bodies, according to the embodiments of the present disclosure, reduce or prevent any distortions in the wavefront characteristics of EUV projection optics.

According to aspects of the present disclosure, a glass body is disclosed comprising titania and silica, wherein an average hydroxyl concentration amongst a plurality of segments of the glass body is about 60 ppm or less, the hydroxyl concentration being measured using a Fourier transform infrared spectroscopy in transmission, and the plurality of segments including every adjacent segment across a length and a width of the glass body, the length being about 25 mm or more and the width being about 25 mm or more, and the glass body comprising a chlorine concentration of about 5 ppm or less.

According to aspects of the present disclosure, a method is disclosed comprising the steps of pressing titania-doped silica soot to form a molded soot body such that the titania-doped silica soot has a density of about 0.65 g/cm$^3$ or greater, consolidating the molded soot body by heating the molded soot body, and annealing the consolidated glass body, wherein the consolidated and annealed glass body comprises a chlorine concentration of about 5 ppm or less.

According to aspects of the present disclosure, a method is disclosed comprising the steps of pressing titania-doped silica soot to form a molded soot body such that the titania-doped silica soot has a density of about 0.50 g/cm$^3$ or greater, consolidating the molded soot body by heating the molded soot body, and annealing the consolidated glass body, wherein the consolidated and annealed glass body comprises a chlorine concentration of about 100 ppm or less, and wherein an average hydroxyl concentration amongst a plurality of segments of the consolidated and annealed glass body is about 100 ppm or less, such as about 0 ppm to about 100 ppm, the hydroxyl concentration being measured using a Fourier transform infrared spectroscopy in transmission, and the plurality of segments including every adjacent segment across a length and a width of the glass body, the length being about 25 mm or more and the width being about 25 mm or more.

**BRIEF DESCRIPTION OF THE DRAWINGS**

While the specification concludes with claims particularly pointing out and distinctly claiming the subject matter of the description, it is believed that the description will be better understood from the following specification when taken in conjunction with the accompanying drawings.

FIG. 1 is a flowchart of a process of forming a glass body, according to embodiments disclosed herein;
FIG. 2A is a schematic illustration of a system to produce loose soot particles in the process of FIG. 1, according to the embodiments disclosed herein;
FIGS. 2B and 2C each show molded bodies according to the process of FIG. 1;

FIG. 3 is a flowchart of a consolidation process of the process of FIG. 1;
FIG. 4 is a flowchart of a consolidation process of the process of FIG. 1;
FIG. 5 is a flowchart of a consolidation process of the process of FIG. 1;
FIG. 6 is a flowchart of a consolidation process of the process of FIG. 1;
FIG. 7A shows an exemplary glass body, according to embodiments disclosed herein;
FIG. 7B shows a cross-section of a sample of the glass body of FIG. 7A, according to embodiments disclosed herein; and
FIG. 7C shows another cross-section of a sample of the glass body of FIG. 7A with an outer, peripheral lip, according to embodiments disclosed herein.

## DETAILED DISCLOSURE

As used herein, "ppm" means parts per million by weight.

As used herein, "atm" means atmospheric pressure.

As used herein, the term "hydroxyl(s)" or OH means a moiety or a group of moieties each consisting of an oxygen atom and a protium atom ($_1^1$H, referred to herein as "H"), unless otherwise specified. As used herein, n(OH) means the total number of OH or hydroxyl moieties in a material.

As used herein, "protium" refers to the hydrogen isotope having a mass number of 1 and consisting of a single proton and electron. The symbols "H" and "H2" refer to protium ($_1^1$H) atoms and molecules, respectively, unless otherwise specified. As used herein, the terms n(H) and n(H$_2$) refer to the total number of protium atoms and molecules, respectively, in a material.

As used herein, "deuterium" refers to the hydrogen isotope having one proton and one neutron in its nucleus and having an atomic weight of 2.0144. The symbols "D" and "D$_2$" refer to deuterium ($_1^2$H) atoms and molecules, respectively, unless otherwise specified. As used herein, the terms n(D) and n(D$_2$) refer to the total number of deuterium atoms and molecules, respectively, in a material.

As used herein, the term "deuteroxyl(s)" or OD means a moiety or a group of moieties, each consisting of an oxygen atom and a deuterium atom ($_1^2$H or $_1^2$D, referred to herein as "D"). As used herein, n(OD) means the total number of OD moieties in a material. When hydroxyl and deuteroxyl groups are present in their natural isotopic abundance, the ratio of n(OD)/(n(OD)+n(OH)) in the material is equal to $2\times10^{-4}$.

As used herein, the terms "hydrogen" and "molecular hydrogen" refer to the naturally occurring mixture of protium and deuterium molecules and atoms (99.98% protium and 0.02% deuterium), unless otherwise stated.

Unless otherwise specified, when reference is made to any element other than hydrogen, it is understood that the element is present in its naturally occurring state; i.e., the isotopic distribution of the element is that which occurs in nature, and the element is not enriched in any one isotope.

As used herein, the term "fictive temperature" refers to a concept used to indicate the structural state of a glass. Glass that is cooled quickly from a high temperature typically exhibits a higher fictive temperature than an identical glass cooled from the same temperature more slowly because of the "frozen in" higher temperature structure. When a glass is held at an elevated temperature, the glass structure is allowed more time to relax toward the heat treatment temperature structure. Glasses with a relatively high fictive temperature have structures that are further removed from equilibrium than glasses with a relatively low fictive temperature.

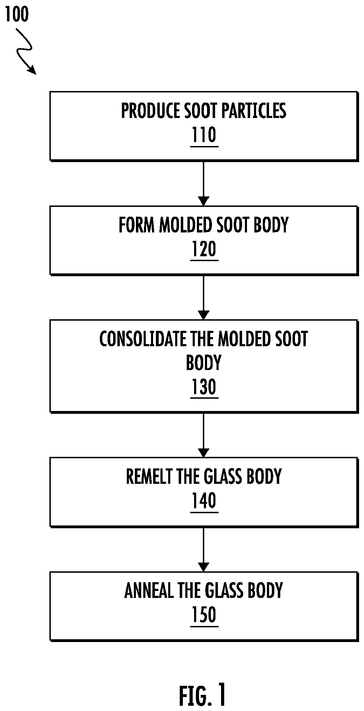

FIG. 1 depicts a process 100 to produce a titania-silica (TiO$_2$-SiO$_2$) glass body suitable for use in EUV lithography applications. As discussed further below, the produced glass has low halide concentrations and uniform OH concentrations across the body. Because thermal expansion properties depend (at least in part) on OH uniformity, a uniform distribution of OH is necessary to achieve a uniform thermal expansion across the glass body. Having a uniform thermal expansion across the glass body allows the glass body to not change shape when exposed to different temperature environments, which is beneficial in, for example, lithography applications. Therefore, the glass bodies disclosed herein are suitable for use in, for example, EUV lithography applications. The glass may be Ultra Low Expansion glass (ULE® Glass) manufactured by Corning Incorporated.

EUV lithography technology relies on an optical projection system to expose a reflective mirror and/or photomask with EUV light, such that light reflected from the mirror and/or photomask is directed to a thin photosensitive layer deposited on the surface of a semiconductor wafer. This technique is commonly used in the semiconductor device production process. EUV lithography systems operate at a wavelength of light of about 13.5 nm. This extremely short wavelength poses a number of challenges to the design of the EUV systems. For example, reflective coatings on the bodies of the mirror and/or photomask in EUV systems are not able to reflect all of the light with such a low wavelength. About thirty percent of the light is absorbed by the reflective coatings, rather than reflected. The absorbed light produces undesirable heat in the glass body, causing the glass body to change shape (e.g., thermally expand or contract). Such changes in the glass body can in turn cause the reflective coating on the glass body to deform, which leads to distortions in the wavefront of the reflected light. Wavefront distortions may lead to deterioration in the resolution of the EUV system and errors in the patterns formed on the photosensitive layer.

Thus, the glass bodies of the mirror and/or photomask must be able to maintain their shape and figure even when subjected to the demanding thermal loads of EUV systems. Silica-titania glass, such as ULE® Glass, is presently the material of choice for glass bodies in EUV systems.

It has recently been shown that higher levels of compositional uniformity in silica-titania glass minimize any change of shape of the glass in an EUV system. More specifically, with such higher levels of uniformity, the glass maintains its overall figure when subject to temperature changes in the EUV system. Embodiments of the present disclosure are directed to producing glass bodies with such compositional uniformity. In particular, embodiments of the present disclosure are directed to producing glass bodies with uniform concentrations of OH (and OD).

Furthermore, embodiments of the present disclosure are directed to producing glass bodies with low concentrations of OH (and OD). With relatively lower concentrations of OH (and OD), it is easier to produce the desired compositional uniformity in the glass than with relatively higher concentrations. More specifically, with relatively low concentrations, any offset from a mean OH (or OD) concentration is still within an acceptable range to achieve the required composition uniformity. Because the OH (and OD) concentrations are so low, any offset from the mean OH (or OD) is also quite low. However, with larger concentrations, the offset from the mean concentration can become quite large, thus producing OH (and OD) concentrations that vary widely across the glass body. Because the OH (and OD) concentrations are so high, the offset from the mean can also be quite high.

It is also known in the art that glass bodies with relatively lower OH (and OD) concentrations tend to have higher viscosity, which allows the glass to achieve a higher fictive temperature when annealed. A higher fictive temperature advantageously correlates to a lower coefficient of thermal expansion (CTE) value. As is known in the art, CTE is a material property of the glass that is indicative of the extent to which the material expands (changes shape) when heated. Therefore, lower CTE values advantageously allows the glass body to not change shape when exposed to different temperature environments, which as discussed above, is beneficial in lithography applications.

The compositional uniformity of the glass bodies (e.g., OH and OD uniformity) is ultimately desired in order to achieve uniform and low CTE of the glass. Uniform and low CTE values advantageously allow the shape of the glass body to remain substantially constant when the glass is heated, which is necessary in EUV systems. As discussed above, undesirable heat or non-uniform heat in an EUV system can cause a glass body in the system to thermally expand or contract. But a glass body with a uniform and low CTE value would not be as susceptible to such expansion or contraction distortions when heated.

Modifiers may be added to glass bodies to improve the expansivity behavior of the glass. However, it is known in the art that such modifiers decrease the homogeneity of the glass, making it more difficult to create a homogenous glass. A homogenous glass is important not only with regard to the thermal expansion behaviors of the glass but also with regard to its polishing capabilities. For example, the uniformity of the $TiO_2$ concentration throughout a glass body affects the polishing capabilities of that glass body. In particular, a glass body with different localized areas of $TiO_2$ concentration would polish unevenly, as areas with different concentrations of $TiO_2$ in a glass polish at different rates. Therefore, embodiments of the present disclosure also produce glass bodies with uniform concentrations of $TiO_2$ so that the glass will polish evenly.

The uniform concentrations of OH and $TiO_2$ in the glass bodies produced according to the embodiments of the present disclosure are achieved by using zero to very small amounts of halogens. Therefore, the produced glass bodies also comprise very small concentrations of halogens, which is a stark contrast with traditional processes. It is known in the art to produce, for example, glass bodies with low OH concentrations when using halogens to etch away the OH in the glass. However, the inventors of the present disclosure were able to produce such low OH concentrations without the use of halogens.

Another important feature for glass bodies in EUV systems is the temperature at which the CTE of the glass body is exactly equal to zero. This temperature is known as the zero crossing temperature and is denoted Tzc. Glass bodies in EUV systems should ideally have a Tzc value near the temperature of the glass body when it is exposed to the EUV light of the EUV system. When the Tzc value matches (or is close to) this temperature, the glass body will experience minimal expansion (and, thus, minimal figure distortion) during operation of the EUV system.

It is also noted that Tzc is directly related to the OH and $TiO_2$ concentration in a glass substrate (at typical fictive temperature ranges). Therefore, as the $TiO_2$ concentration increases, the Tzc will also increase. However, OH concentration is inversely related to Tzc so as the OH concentration increases, the Tzc will decrease.

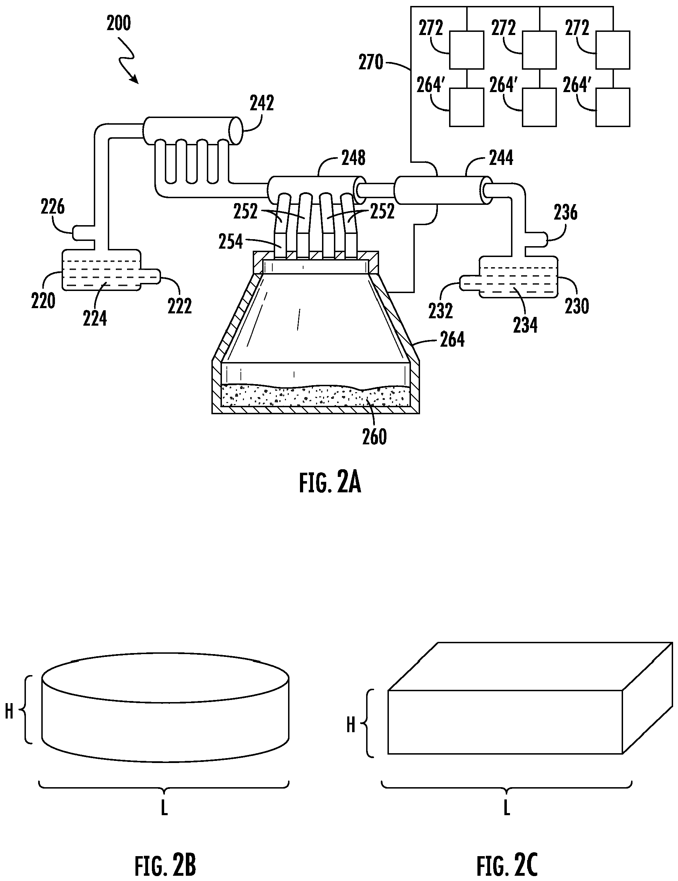

With reference to FIG. 1, step 110 of process 100 comprises the production of soot particles. More specifically, step 110 comprises forming the soot particles as loose soot particles and then collecting the loose soot particles. FIG. 2A depicts a schematic representation of a system 200 to produce the loose soot particles using a combustion process. As shown in FIG. 2A, system 200 comprises a first reservoir 220 that houses a silica precursor 224 and a second reservoir 230 that houses a titania precursor 234. First reservoir 220 includes an inlet 222 for introduction of a carrier gas, such as nitrogen, at or near the base of the reservoir. The carrier gas forms a vaporous stream with the silica precursor 224. Similarly, second reservoir 230 includes an inlet 232 for introduction of a carrier gas, such as nitrogen, at or near the base of the reservoir. The carrier gas in second reservoir 230 forms a vaporous stream with the titania precursor 234.

The silica precursor 224 may comprise, for example, $SiCl_4$ and/or octamethylcyclotetrasiloxane (OMCTS). The titania precursor 234 may comprise, for example, $TiCl_4$ or titanium isopropoxide (TPT) (titanium tetraisopropoxide (TTIP), tetraisopropyltitanate (TIPT)).

Bypass streams of carrier gas are also introduced into system 200 at inlets 226 and 236 to prevent saturation of the vaporous silica stream and the vaporous titania stream. The vaporous silica stream then passes through distribution system 242 to manifold 248, and the vaporous titania stream passes through distribution system 244 to manifold 248.

The silica and titania vaporous streams then mix in manifold 248 to form a mixture of the two streams. As further shown in FIG. 2A, the mixture of the two streams flows to reaction chamber 264. More specifically, the mixture of the two streams passes through fume lines 252 to burners 254 mounted in an upper portion of reaction chamber 264. The two streams are further joined with a fuel/oxygen mixture at burners 254 to combust and oxidize the mixture. The fuel may be natural gas. The oxidation and combustion of the mixture forms loose soot particles 260, which are cooled and directed into reaction chamber 264. Soot particles 260 comprise silicon dioxide and titanium dioxide. More specifically, the silicon dioxide and titanium dioxide in the particles mix at the atomic level to form Si-O-Ti bonds.

In some embodiments, soot particles 260 are directed upward through a tube 270 rather than downward into collection chamber 264. Tube 270 may be a quartz tube, which carries soot particles 260 in a vaporous stream to one or more filter bags 272. The soot particles 260 are removed from the vaporous stream by the filter bags 272 and are then deposited into one or more collection chambers 264'. For example, the soot particles 260 fall downward from filter bags 272 and into collection chambers 264'. A pulse of $N_2$ may periodically be applied to filter bags 272 to prevent the excess accumulation of soot particles 260 on the bags. In some embodiments, collection chambers 264' are stainless steel hoppers. The soot particles 260 can then be further collected from collection chambers 264' and deposited into barrels, where soot particles 260 may be stored until further use.

The produced soot particles 260 are spherical in shape with substantially uniform distributions of $SiO_2$ and $TiO_2$ within the particles. The size of each soot particle 260 may vary depending on the conditions of burners 254, but in general, soot particles 260 have an average diameter of about 20 nm to about 500 nm, or about 50 nm to about 400 nm, or about 60 nm to about 300 nm, or about 50 nm to about 100 nm.

Soot particles 260 may cool to about 200°C or less, or about 175°C or less, or about 150°C or less, or about 125°C or less, or about 100°C or less, or about 75°C or less, or about 50°C or less, or about 25°C or less, or about 20°C or less before reaching collection chambers 264, 264'.

With reference again to FIG. 1, at step 120 of process 100, soot particles 260 are removed from reaction chamber 264 and/or collection chambers 264' and deposited into a mold to form a pressed and molded soot body, which has a density of about 0.50 $g/cm^3$ or greater, or about 0.55 $g/cm^3$ or greater, or about 0.60 $g/cm^3$ or greater, or about 0.65 $g/cm^3$ or greater, or about 0.70 $g/cm^3$ or greater, or about 0.75 $g/cm^3$ or greater, or about 0.80 $g/cm^3$ or greater, or about 0.85 $g/cm^3$ or greater. Additionally or alternatively, the molded soot body has a density of about 1.50 $g/cm^3$ or less, or about 1.40 $g/cm^3$ or less, or about 1.30 $g/cm^3$ or less, or about 1.20 $g/cm^3$ or less, or about 1.15 $g/cm^3$ or less, or about 1.10 $g/cm^3$ or less, or about 1.00 $g/cm^3$ or less, or about 0.95 $g/cm^3$ or less, or about 0.90 $g/cm^3$ or less, or about 0.85 $g/cm^3$ or less, or about 0.80 $g/cm^3$ or less, or about 0.75 $g/cm^3$ or less, or about 0.70 $g/cm^3$ or less. In embodiments, the molded soot body has a density from about 0.50 $g/cm^3$ to about 1.50 $g/cm^3$, or about 0.60 $g/cm^3$ to about 1.40 $g/cm^3$, or about 0.80 $g/cm^3$ to about 1.30 $g/cm^3$, or about 0.90 $g/cm^3$ to about 1.00 $g/cm^3$, or about 0.80 $g/cm^3$ to about 1.50 $g/cm^3$, or about 0.80 $g/cm^3$ to about 1.20 $g/cm^3$, or about 0.80 $g/cm^3$ to about 0.90 $g/cm^3$. The molded soot body is formed such that any density variation in the body is about 5% or less, or about 4% or less, or about 3% or less, or about 2% or less, or about 1% or less, or about 0.75% or less, or about 0.50% or less, or about 0.25% or less, or about 0.20% or less, or about 0.15% or less, or about 0.10% or less, or about 0.05% or less, or about 0.02% or less, or about 0.01% or less, or about 0.00% from an average density across the body. FIG. 2B shows an exemplary cylindrical molded soot body and FIG. 2C shows an exemplary rectangular molded soot body, although the molded soot body may comprise other shapes than those specifically depicted herein. As shown in FIGS. 2B and 2C, the molded soot body has a length L and a height H. It is noted that the length L is also the diameter for the cylindrical body of FIG. 2B.

In embodiments, the length L of the body may be from about 20 mm to about 1300 mm, or about 40 mm to about 1200 mm, or about 60 mm to about 1000 mm, or about 80 mm to about 800 mm, or about 100 mm to about 60 mm, or about 20 mm to about 40 mm. Furthermore, in some embodiments, the height H of the body is about 50 m to about 500 mm, or about 60 mm to about 400 mm, or about 80 mm to about 200 mm, or about 100 mm to about 200 mm, or about 250 mm to about 500 mm, or about 250 mm to about 400 mm, or about 250 mm to about 300 mm, or about 200 mm to about 500 mm, or about 200 mm to about 400 mm, or about 200 mm to about 300 mm. However, it is noted that the length L and height H of the body can vary and are not limited by the embodiments disclosed herein. It is also noted that in some embodiments, the length L is larger than the height H of the body, while in other embodiments the height H is larger than the length L.

With reference again to process 100, at step 130, the molded soot body is then consolidated into a glass body.

After consolidation, the body is remelted at step 140 and then annealed at step 150 to relax any internal stress in the body and lower the Tf in the body, along with lowering Tf variations in the body. Relaxed internal stress allows for better quality cutting and machining of the body, such as slicing the body into a plurality of slices. In some embodiments, the body is annealed for a duration of about 100 hours or more, or about 200 hours or more, or about 250 hours or more. The maximum annealing temperature may be from about 750°C to about 1200°C, or about 800°C to about 1100°C, or about 900°C to about 1000°C. Once the annealing step is complete, the body may be subjected to subsequent finishing steps such as shaping, grinding, polishing, and/or slicing.

In traditional consolidation processes (during step 130 of process 100), the molded soot body is placed into a consolidation furnace and heated in order to dry the body. In particular, a traditional consolidation process includes drying a soot body with a halide-containing gas (e.g., chlorine containing gas) while heating the soot body. Next, the soot body is heated to a temperature up to about 1500°C in an inert gas atmosphere to fully consolidate the soot body into a glass body.

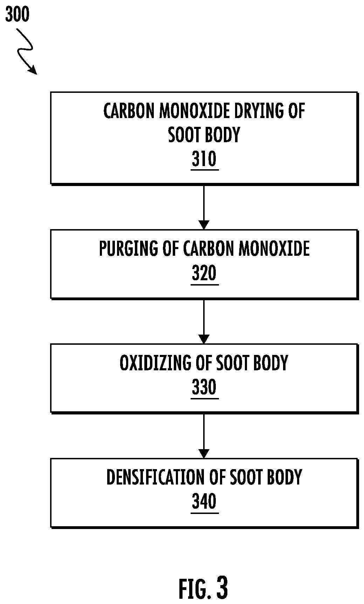

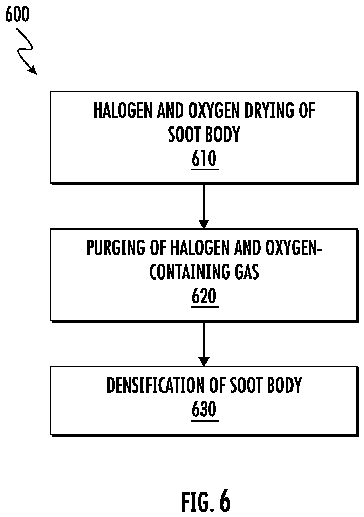

In embodiments disclosed herein, aspects of the present disclosure comprise consolidating the molded soot body without exposing the soot to halides during the consolidation of step 130. In particular, the consolidation processes of FIGS. 3-5 (as discussed below) each consolidate the soot bodies with no (i.e., zero) purposefully added halides. The process of Fig. 6 removes water with a minimum addition of halides along with oxygen to minimize the effects of the halides on the $TiO_2$. Therefore, the produced glass bodies comprise little to no halides (such as chlorine, fluoride, bromine), which negatively contribute to non-uniformity in the glass. As is known in the art, the presence of halides can cause an undesirable reaction with $TiO_2$ in the glass. For example, chlorine and $TiO_2$ react to produce titanium chlorides and oxychlorides (e.g., titanium tetrachloride $TiCl_4$, titanium trichloride $TiCl_3$, titanium dichloride $TiCl_2$), which is in a gas phase and, therefore, can move to different locations within the glass body. Because the titanium chloride is able to move the Ti within the glass body, the Ti is not evenly spread out and is not uniform throughout the glass body. Instead, the produced glass body may comprise certain locations with relatively higher concentrations of Ti. The higher levels of Ti in these locations will cause the resultant glass body to polish unevenly. Therefore, embodiments of the present disclosure consolidate the soot body with a minimum amount of halides or with the avoidance of any intentionally added halides.

FIG. 3 depicts a first exemplary embodiment of the consolidation step of process 100. More specifically, in some embodiments, step 130 of process 100 comprises the steps of process 300. As shown in FIG. 3, process 300 comprises actively drying (e.g., dehydrating) the molded soot body with carbon monoxide (CO) while consolidating the soot. In particular, process 300 comprises actively drying the molded soot body with CO to reduce the combined concentration of OH and OD in the consolidated glass body. And process 300 comprises actively drying the molded soot body with CO to produce a glass body with uniform concentrations of OH and OD throughout.

Process 300 is conducted in a substantially halogen-free atmosphere. As used herein, "substantially halogen-free" means that the halogens (e.g., chlorine, fluorine, bromine) are not intentionally added to the soot body in either elemental form or as a halogen-containing compound. It is understood that the glass body may inadvertently contain small amounts of halogen due to contamination.

The mechanism for drying the soot body using the steps of process 300 is based on the reaction between CO and OH (or OD) to produce protium $H_2$ (or deuterium $D_2$) and $CO_2$. Step 310 of process 300 comprises flowing CO-containing gas within a consolidation furnace to dry (e.g., dehydrate) the molded soot body. The gas may comprise other components in addition to CO such as one or more inert carrier gases (e.g., helium, argon, nitrogen, neon). The gas comprises from about 0.5 wt.% to about 10 wt.% CO, or from about 1 wt.% to about 8 wt.% CO, or from about 2 wt.% to about 6 wt.% CO, or from about 2 wt.% to about 4 wt.% CO. The drying of step 310 may be carried out for a time period ranging from about 1 hour to about 200 hours, or about 5 hours to about 100 hours, or about 10 hours to about 50 hours.

Unless otherwise specified, the drying steps disclosed herein are carried out in atmosphere in which the gas(es) are continuously flowed or "swept" over the soot body.

The drying of step 310 removes any OH and/or OD in the soot by reacting these molecules with the CO gas, while heating the glass, to form $CO_2$ and $H_2$ (or $D_2$). It is noted that a side effect of using CO to dry the soot is that some of the $TiO_2$ in the soot is reduced to TiO and $Ti_2O_3$. In some embodiments, the soot body may be doped with at least one of OH and OD before the drying of step 310 in order to achieve a predetermined or desired concentration of OH and/or OD in the produced glass body and to improve the homogeneity of these molecules in the produced glass body.

At step 320, the CO gas may be purged from the consolidation furnace and from the glass soot by, for example, flowing an inert gas (e.g., helium, argon, nitrogen, neon) through the consolidation furnace. In embodiments, the inert gas is helium gas. At step 330, oxygen gas ($O_2$) is flown through the consolidation furnace. The $O_2$-containg gas may further include one or more inert carrier gases (e.g., helium, argon, nitrogen, neon). The $O_2$-containing gas should be free or essentially free of water. If trace amounts of water are present in the $O_2$-containing atmosphere, the soot body will absorb water during the sintering step, resulting in an increase in OH concentration of the glass at or near the edges of the sintered glass.

The $O_2$-containing gas comprises from about 0.5 wt.% to about 5 wt.% $O_2$, or from about 1 wt.% to about 4 wt.% $O_2$, or from about 1 wt.% to about 3 wt.% $O_2$. The oxidizing step (step 330) may be carried out for a time period ranging from about 30 minutes to about 5 hours, or about 30 minutes to about 2 hours, or about 30 minutes to about 1 hour. The $O_2$ gas oxidizes the titanium species (Ti, TiO, $Ti_2O_3$) in the soot body, thus forming titania ($TiO_2$) again. It is noted that the oxidation of the titanium species occurs while the soot body is still porous (before the soot has fully densified). Furthermore, the $O_2$ gas ensures complete conversion of CO to $CO_2$ and repairs any damage to the soot body caused by CO drying.

Unless otherwise specified, the oxidizing steps disclosed herein are carried out in an atmosphere in which the gas(es) are continuously flowed or "swept" over the soot body.

During steps 310 through 330, the consolidation furnace is heated to a first temperature ($T_1$) from about 900°C to about 1300°C, or about 950°C to about 1250 °C, or about 1000°C to about 1200°C, or about 1050°C to about 1150°C, or about 1100°C to about 1200°C. In some embodiments, the drying of step 310 is performed at a different temperature than the oxidizing of step 330. As noted above, steps 310 through 330 are performed before the soot body is fully densified and while the pores in the glass are open. The open porosity of the soot body enables more effective drying of the glass and removal of water, OH, and OD groups with the CO-containing gas. At step 340, the temperature of the consolidation furnace increases in order to densify the soot body. In particular, the temperature increases from the first temperature ($T_1$) to a second temperature ($T_2$) in order to fully densify the glass and to close any open pores in the glass. The second temperature is from about 1100°C to about 1500°C, or about 1150°C to about 1450°C, or about 1200°C to about 1400°C, or about 1225°C to about 1350°C, or about 1225°C to about 1300°C, or about 1250°C to about 1300°C, or about 1250°C to about 1275°C. The second temperature is higher than the first temperature. While heating the soot body at the second temperature, an inert gas (e.g., helium, argon, nitrogen, neon) may be flown through the consolidation furnace. In some embodiments, the heating of the soot body is performed in a vacuum.

The densification of step 340 may be carried out for a time period ranging from about 4 hours to about 20 hours, or about 5 hours to about 15 hours, or about 5 hours to about 10 hours. Therefore, the soot body may be heated at the second temperature for these time periods.

It is noted that during steps 310 through 330 of process 300, the OH (and OD) in the soot body was reduced and/or eliminated. In particular, OH (and OD) in the soot body was converted to protium $H_2$ (or deuterium $D_2$) and $CO_2$ with the CO drying. With the reduction and/or elimination of OH (and OD), the temperature of the consolidation furnace can be quickly increased from the first temperature to the second temperature at a fast rate with diminished OH non-uniformity concerns. With larger amounts of OH (or OD), the glass is more susceptible to non-uniformity when subjected to such fast temperature increase rates during consolidation. Fast temperature increase rates cause radially outer portions of a soot body to sinter first (and, therefore, for a longer period of time) as compared to radially inner portions of the soot body. This can be a problem with soot bodies that comprise larger amounts of OH (or OD) as the sintering causes the soot body to lose OH (or OD) molecules. Therefore, the radially outer portions of the soot body would lose more OH (or OD) molecules than the radially inner portions of the soot body, resulting in a non-uniform glass body. This problem is very much diminished when the soot body comprises low to zero concentrations of OH (or OD).

In embodiments, the temperature of the consolidation furnace increases from the first temperature ($T_1$) to the second temperature ($T_2$) (during step 340) at a rate of about 5°C/hour or greater, or about 8°C/hour or greater, or about 10°C/hour or greater, or about 12°C/hour or greater, or about 15°C/hour or greater, or about 20°C/hour or greater, or about 25°C/hour or greater, or about 30°C/hour or greater, or about 35°C/hour or greater, or about 40°C/ hour or greater, or about 45°C/ hour or greater, or about 50°C/ hour or greater. Additionally or alternatively, the temperature of the consolidation furnace increases from the first temperature to the second temperature (during step 340) at a rate of about 60°C/ hour or less, or about 55°C/ hour or less, or about 50°C/ hour or less, or about 45°C/ hour or less, or about 40°C/ hour or less, or about 35°C/ hour or less, or about 30°C/ hour or less, or about 25°C/ hour or less, or about 20°C/ hour or less, or about 15°C/ hour or less, or about 12°C/ hour or less, or about 10°C/ hour or less, or about 8°C/ hour or less. In embodiments, the temperature increase is at a rate from about 5°C/ hour to about 60°C/ hour, or about 8°C/ hour to about 55°C/ hour.

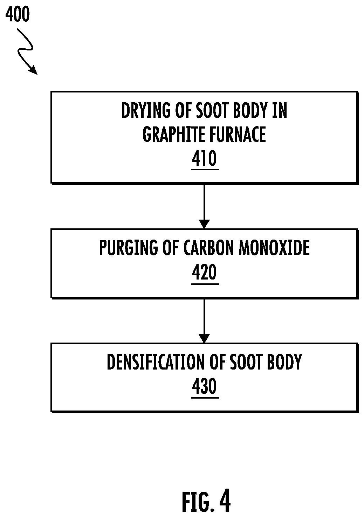

FIG. 4 depicts a second exemplary embodiment of the consolidation step of process 100. More specifically, in some embodiments, step 130 of process 100 comprises the steps of process 400. As shown in FIG. 4, process 400 comprises drying (e.g., dehydrating) the molded soot body in a graphite furnace. Similar to process 300 above, the steps of process 400 are also conducted in a substantially halogen-free atmosphere. The mechanism for drying the soot body using the steps of process 400 is based on the reaction between C in the graphite furnace and $O_2$ gas or $CO_2$ gas to produce CO, which dries the glass and reacts with OH (or OD) in the glass to produce protium $H_2$ (or deuterium $D_2$) and $CO_2$.

Step 410 of process 400 comprises flowing $O_2$-containing gas and/or $CO_2$-containing gas within the consolidation furnace in order to dry (e.g., dehydrate) the soot. The gas may comprise other components in addition to $O_2$ and/or $CO_2$ such as one or more inert carrier gases (e.g., helium, argon, nitrogen, neon). The gas comprises from about 0.5 wt.% to about 10 wt.% $O_2$, or from about 1 wt.% to about 8 wt.% $O_2$, or from about 2 wt.% to about 6 wt.% $O_2$, or

from about 2 wt.% to about 4 wt.% $O_2$. Additionally or alternatively, the gas comprises from about 0.5 wt.% to about 10 wt.% $CO_2$, or from about 1 wt.% to about 8 wt.% $CO_2$, or from about 2 wt.% to about 6 wt.% $CO_2$, or from about 2 wt.% to about 4 wt.% $CO_2$. The drying of step 410 may be carried out for a time period ranging from about 1 hour to about 200 hours, or about 5 hours to about 100 hours, or about 10 hours to about 50 hours.

The $O_2$ in the $O_2$-containing gas and/or the $CO_2$ in the $CO_2$-containing gas reacts with the C in the graphite furnace (during step 410) to produce CO, which dries the soot as discussed above with reference to process 300. In particular, the drying of step 410 removes any OH and/or OD in the soot by reacting these molecules with the produced CO, while heating the soot, to form $CO_2$. In some embodiments, the soot body may be doped with at least one of OH and OD before the drying of step 410 in order to achieve a predetermined or desired concentration of OH and/or OD in the produced glass body and to improve the homogeneity of these molecules in the produced glass body.

Even without the addition of the $O_2$-containing gas or the $CO_2$-containing gas, it is noted that the OH in the soot will produce $H_2O$ or $D_2O$ when heated. These waters (the $H_2O$ and $D_2O$) react with the C in the graphite furnace to produce CO, which helps to dry the soot as described above. However, in order to fully dry the soot, the addition of the $O_2$-containing gas and/or the $CO_2$-containing gas is most likely required.

At step 420, the CO gas may be purged from the consolidation furnace and from the soot body by, for example, flowing an inert gas (e.g., helium, argon, nitrogen, neon) through the consolidation furnace. In embodiments, the inert gas is helium gas.

In contrast to process 300, process 400 does not comprise an oxidizing step with an $O_2$-containing gas, as such would react with the C in the graphite furnace and destroy the furnace. Therefore, the titanium species (Ti, TiO, $Ti_2O_3$) in the soot body would not be oxidized with an $O_2$-containing gas so that the produced glass body would comprise reduced amounts of titania ($TiO_2$).

During steps 410 through 420, the consolidation furnace is heated to the first temperature ($T_1$), as discussed above. Steps 410 through 420 are performed before the soot body is fully densified and while the pores in the soot are open. The open porosity of the soot body enables more effective drying of the soot and removal of water, OH, and OD groups with the produced CO-containing gas. At step 430, the temperature of the consolidation furnace increases in order to densify the soot body. In particular, the temperature increases from the first temperature ($T_1$) to the second temperature ($T_2$), as discussed above, in order to fully densify the soot and to close any open pores in the soot. While heating the soot body at the second temperature, an inert gas (e.g., helium, argon, nitrogen, neon) may be flown through the consolidation furnace or under vacuum.

The densification of step 430 may be carried out for a time period ranging from about 4 hours to about 20 hours, or about 5 hours to about 15 hours, or about 5 hours to about 10 hours. Therefore, the soot body may be heated at the second temperature for these time periods.

It is noted that during steps 410 through 420 of process 400, the OH (and OD) in the soot body was reduced and/or eliminated. In particular, OH (and OD) in the soot body was converted to protium $H_2$ (or deuterium $D_2$) and $CO_2$ with the CO drying. With the reduction and/or elimination of OH (and OD), the temperature of the consolidation furnace can be quickly increased from the first temperature to the second temperature at the fast rates discussed above with reference to process 300 (e.g., from about 5°C/hour to about 60°C/hour).

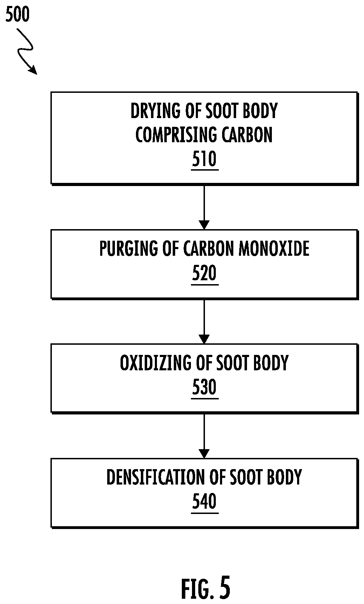

FIG. 5 depicts a third exemplary embodiment of the consolidation step of process 100. More specifically, in some embodiments, step 130 of process 100 comprises the steps of process 500. As shown in FIG. 5, process 500 comprises drying (e.g., dehydrating) a molded soot body that comprises carbon to reduce the combined concentration of OH and OD in the consolidated glass body. Similar to process 300 above, the steps of process 500 are also conducted in a substantially halogen-free atmosphere. The mechanism for drying the soot body using the steps of process 400 is based on the reaction between the carbon in the molded soot body and $O_2$ gas or $CO_2$ gas to produce CO, which dries the soot and reacts with OH (or OD) in the glass to produce protium $H_2$ (or deuterium $D_2$) and $CO_2$.

In process 500, the soot particles 260 (as discussed above with reference to FIG. 2) are first mixed with carbon powder. In some embodiments, soot particles 260 are mixed with the carbon powder in reaction chamber 264. The resulting soot particles may comprise from about 1 wt.% to about 10 wt.% carbon, or from about 2 wt.% to about 8 wt.% carbon, or from about 1 wt.% to about 5 wt.% carbon. These soot particles are then molded into a soot body, as discussed above. The molded soot body comprising carbon is then consolidated using the steps of process 500.

Step 510 of process 500 comprises flowing $O_2$-containing gas and/or $CO_2$-containing gas within the consolidation furnace in order to dry (e.g., dehydrate) the soot. The gas may comprise other components in addition to $O_2$ and/or $CO_2$ such as one or more inert carrier gases (e.g., helium, argon, nitrogen, neon). The gas comprises, in some embodiments, from about 0.5 wt.% to about 10 wt.% $O_2$, or from about 1 wt.% to about 8 wt.% $O_2$, or from about 2 wt.% to about 6 wt.% $O_2$, or from about 2 wt.% to about 4 wt.% $O_2$. Additionally or alternatively, the gas comprises, in some embodiments, from about 0.5 wt.% to about 10 wt.% $CO_2$, or from about 1 wt.% to about 8 wt.% $CO_2$, or from about 2 wt.% to about 6 wt.% $CO_2$, or from about 2 wt.% to about 4 wt.% $CO_2$. The drying of step 510 may be carried out for a time period ranging from about 1 hour to about 200 hours, or about 5 hours to about 100 hours, or about 10 hours to about 50 hours.

The $O_2$ in the $O_2$-containing gas and/or the $CO_2$ in the $CO_2$-containing gas reacts with the carbon in the molded soot body (during step 510) to produce CO, which dries the soot as discussed above with reference to process 300. In particular, the drying of step 510 removes any OH and/or OD in the glass by reacting these molecules with the produced CO, while heating the soot, to form $CO_2$. In some embodiments, the soot body may be doped with at least one of OH and OD before the drying of step 510 in order to achieve a predetermined or desired concentration of OH and/or OD in the produced glass body and to improve the homogeneity of these molecules in the produced glass body.

At step 520, the CO gas may be purged from the consolidation furnace and from the soot body by, for example, flowing an inert gas (e.g., helium, argon, nitrogen, neon) through the consolidation furnace. In embodiments, the inert gas is helium gas.

At step 530, oxygen gas ($O_2$) is flown through the consolidation furnace. The $O_2$-contaning gas may further include one or more inert carrier gases (e.g., helium, argon, nitrogen, neon). The $O_2$-containing gas should be free or essentially free of water. If trace amounts of water are present in the $O_2$-containing atmosphere, the soot body will absorb water during the sintering step, resulting in an increase in OH concentration of the glass at or near the edges of the sintered glass.

The $O_2$-containing gas comprises from about 0.5 wt.% to about 5 wt.% $O_2$, or from about 1 wt.% to about 4 wt.% $O_2$, or from about 1 wt.% to about 3 wt.% $O_2$. The oxidizing step (step 530) may be carried out for a time period ranging from about 30 minutes to about 5 hours, or about 30 minutes to about 2 hours, or about 30 minutes to about 1 hour. The $O_2$ gas oxidizes the titanium species (Ti, TiO, $Ti_2O_3$) in the soot body, thus forming titania ($TiO_2$) again. It is noted that the oxidation of the titanium species occurs while the soot body is still porous (before the soot has fully densified). Furthermore, the $O_2$ gas ensures complete conversion of CO to $CO_2$ and repairs any damage to the soot body caused by CO drying.

During steps 510 through 530, the consolidation furnace is heated to the first temperature ($T_1$), as discussed above. Steps 510 through 530 are performed before the soot body is fully densified and while the pores in the soot are open. The open porosity of the soot body enables more effective drying of the soot and removal of water, OH, and OD groups with the produced CO-containing gas. At step 540, the temperature of the consolidation furnace increases in order to densify the soot body. In particular, the temperature increases from the first temperature ($T_1$) to the second temperature ($T_2$), as discussed above, in order to fully densify the soot and to close any open pores in the soot. While heating the soot body at the second temperature, an inert gas (e.g., helium, argon, nitrogen, neon) may be flown through the consolidation furnace or under vacuum.

The densification of step 540 may be carried out for a time period ranging from about 4 hours to about 20 hours, or about 5 hours to about 15 hours, or about 5 hours to about 10 hours. Therefore, the soot body may be heated at the second temperature for these time periods.

It is noted that during steps 510 through 530 of process 500, the OH (and OD) in the glass body was reduced and/or eliminated. In particular, OH (and OD) in the glass body was converted to protium $H_2$ (or deuterium $D_2$) and $CO_2$ with the CO drying. With the reduction and/or elimination of OH (and OD), the temperature of the consolidation furnace can be quickly increased from the first temperature to the second temperature at the fast rates discussed above with reference to process 300 (e.g., from about 5°C/hour to about 60°C/hour).

FIG. 6 depicts a fourth exemplary embodiment of the consolidation step of process 100. More specifically, in some embodiments, step 130 of process 100 comprises the steps of process 600. As shown in FIG. 6, process 600 comprises drying (e.g., dehydrating) a molded soot body with a halogen within a desired ratio of the halogen to $O_2$ to produce a soot body with low halogen levels. The mechanism for drying the soot body using the steps of process 600 is based on the drying and etching of the halogen but maintaining the halogen at sufficiently low levels so that it does not affect the CTE uniformity in the produced glass body.

In step 610 of process 500, a halogen and $O_2$-containing gas is flown into a consolidation furnace. A ratio (X) of the partial pressure of halogen in the gas to the partial pressure of $O_2$ in the gas is defined by the following equation:

$$X = [\text{Partial Pressure of Halogen}]^2/[\text{Partial Pressure of } O_2]$$

wherein the partial pressure of the halogen and of $O_2$ in the above equation are each in units of atmospheric pressure (atm). Therefore, X is also in units of atm. X should be equal to about $5\times10^{-6}$ atm to about 1.0 atm to maintain the desired ratio of the halogen and $O_2$ (so that the halogen does not affect the CTE uniformity in the glass). Lower X values correspond to a reduced formation of titanium chloride ($TiCl_3$), which in turn minimizes the movement of $TiO_2$ in the produced glass body

Preferred ranges for X are from about $1\times10^{-6}$ atm to about 0.5 atm, or about $1\times10^{-6}$ atm to about 0.3 atm, or about $1\times10^{-6}$ atm to about 0.1 atm, or about $1\times10^{-5}$ atm to about 1.0 atm, or about $1\times10^{-5}$ atm to about 0.5 atm, or about $1\times10^{-5}$ atm to about 0.3 atm, or about $1\times10^{-5}$ atm to about 0.1 atm, or about $1\times10^{-4}$ atm to about 1.0 atm, or about $1\times10^{-4}$ atm to about 0.5 atm, or about $1\times10^{-4}$ atm to about 0.3 atm, or about $1\times10^{-4}$ atm to about 0.1 atm, or about 5×10⁻⁵ atm to about 0.1 atm, or about 5×10⁻⁵ atm to about 0.01 atm, or about 0.0015 atm to about 0.5 atm, or about 0.0013 atm to about 0.5 atm, or about 0.0015 atm to about 0.01 atm, or about 0.0013 atm to about 0.01 atm. X is representative of the loss of $TiO_2$ in the glass body due to the presence of the halogen. Therefore, it is preferred in some embodiments to have X be low in order to minimize the $TiO_2$ loss. Preferably, the partial pressure of halogen in the gas ([Halogen]) is low and the partial pressure of $O_2$ in the gas ([$O_2$]) is high in order to produce a lower X value.

In one exemplary embodiment, the partial pressure of chlorine in the gas is 0.00218 atm and the partial pressure of $O_2$ in the gas is 0.09071 atm, thus producing an X value of $5.2×10^{-5}$ atm. In another exemplary example, the partial pressure of chlorine in the gas is 0.00109 atm and the partial pressure of $O_2$ in the gas is 0.09081 atm, thus producing an X value of $1.31×10^{-5}$ atm. In another exemplary example, the partial pressure of chlorine in the gas is 0.07692 atm and the partial pressure of $O_2$ in the gas is 0.15385 atm, thus producing an X value of $3.85×10^{-2}$ atm. In another exemplary example, the partial pressure of chlorine in the gas is 0.2 atm and the partial pressure of $O_2$ in the gas is 0.13333 atm, thus producing an X value of $3.00×10^{-1}$ atm. In another exemplary example, the partial pressure of chlorine in the gas is 0.00171 atm and the partial pressure of $O_2$ in the gas is 0.28523 atm, thus producing an X value of $1.03×10^{-5}$ atm.

The halogen and $O_2$-containg gas may further include one or more inert carrier gases (e.g., helium, argon, nitrogen, neon). The halogen and $O_2$-containing gas should be free or essentially free of water. The halogen etches and dries (e.g., dehydrates) the soot body. The $O_2$ gas oxidizes the titanium species (Ti, TiO, $Ti_2O_3$) in the soot body, thus forming titania ($TiO_2$). It is noted that the oxidation of the titanium species occurs while the soot body is still porous (before the soot has fully densified).

At step 620, the halogen and $O_2$-containg gas may be purged from the consolidation furnace and from the soot body by, for example, flowing an inert gas (e.g., helium, argon, nitrogen, neon) through the consolidation furnace. In embodiments, the inert gas is helium gas.

During steps 610 through 620, the consolidation furnace is heated to the first temperature ($T_1$), as discussed above. Steps 610 through 620 are performed before the soot body is fully densified and while the pores in the soot are open. The open porosity of the soot body enables more effective drying of the soot with the halogen. At step 630, the temperature of the consolidation furnace increases in order to densify the soot body. In particular, the temperature increases from the first temperature ($T_1$) to the second temperature ($T_2$), as discussed above, in order to fully densify the soot and to close any open pores in the soot. While heating the soot body at the second temperature, an inert gas (e.g., helium, argon, nitrogen, neon) may be flown through the consolidation furnace or in vacuum.

The densification of step 630 may be carried out for a time period ranging from about 4 hours to about 20 hours, or about 5 hours to about 15 hours, or about 5 hours to about 10 hours. Therefore, the soot body may be heated at the second temperature for these time periods.

It is noted that during steps 610 through 620 of process 500, the OH (and OD) in the glass body was reduced and/or eliminated. In particular, the halogen(s) in the halogen-containing gas reacts with the OH or OD to form HX or DX, respectively, where X can be a fluorine atom, a chlorine atom, or a bromine atom, depending what halogen is used. With the reduction and/or elimination of OH (and OD), the temperature of the consolidation furnace can be quickly increased from the first temperature to the second temperature at the fast rates discussed above with reference to process 300 (e.g., from about 5°C/hour to about 60°C/hour).

With reference again to FIG. 1, process 100 comprises annealing the glass body after the consolidation steps disclosed above. According to embodiments disclosed herein, the annealing step 150 of process 100 may comprise a post-forming fictivation process. As used herein, "fictivation" refers to imposing a specified temperature or thermal history on a glass through appropriate heat treatment. In embodiments disclosed herein, the fictivation process includes "fast cooling" the glass from a first fictivation temperature ($T_{1f}$) to a second fictivation temperature ($T_{2f}$) at a rate of at about 5°C/s or greater, or about 10°C/s or greater, or about 15°C/s or greater, or about 20°C/s or greater or about 25°C/s or greater, or about 30°C/s or greater. In some embodiments, the fictivation process comprises heating the glass to the first fictivation temperature ($T_{1f}$) such that the glass has a viscosity of less than $10^{13}$ poise followed by equilibrating the glass at the first fictivation temperature ($T_{1f}$) for a predetermined time period, and then quickly quenching the glass to the second fictivation temperature ($T_{2f}$), which is below the strain point of the glass. In embodiments, the glass is heated to the first fictivation temperature ($T_{1f}$) such that the glass has a viscosity from about $10^9$ poise to about $10^{13}$ poise, or from about $10^9$ poise to about $10^{12}$ poise, or from about $10^9$ poise to about $10^{11}$ poise, or from about $10^9$ poise to about $10^{10}$ poise followed by the equilibrating and quenching steps.

In some embodiments, the first fictivation temperature ($T_{1f}$) is above the annealing point of the glass. For example, the first fictivation temperature ($T_{1f}$) is about 825°C or greater, or about 850°C or greater, or about 875°C or greater, or about 900°C or greater, or about 925°C or greater, or about 950°C or greater, or about 975°C or greater, or about 1000°C or greater, or about 1025°C or greater, or about 1050°C or greater, or about 1075°C or greater, or about 1100°C or greater, or about 1125°C or greater, or about 1150°C or greater. Furthermore, in some embodiments, the second fictivation temperature ($T_{2f}$) is about room temperature (e.g., about 25°C). In embodiments, the second fictivation temperature ($T_{2f}$) is about 40°C or more below the isothermal hold temperature of the glass or in a range from about 25°C to about 600°C, or about 100°C to about 500°C. The glass may be equilibrated at the first fictivation temperature $(T_{1f})$ for a time period of about 12 hours or greater, or about 16 hours or greater, or about 20 hours or greater or about 24 hours or greater, or about 30 hours or greater. Due to the disclosed fictivation process, the resulting glass bodies have high levels of intrinsic damage resistance.

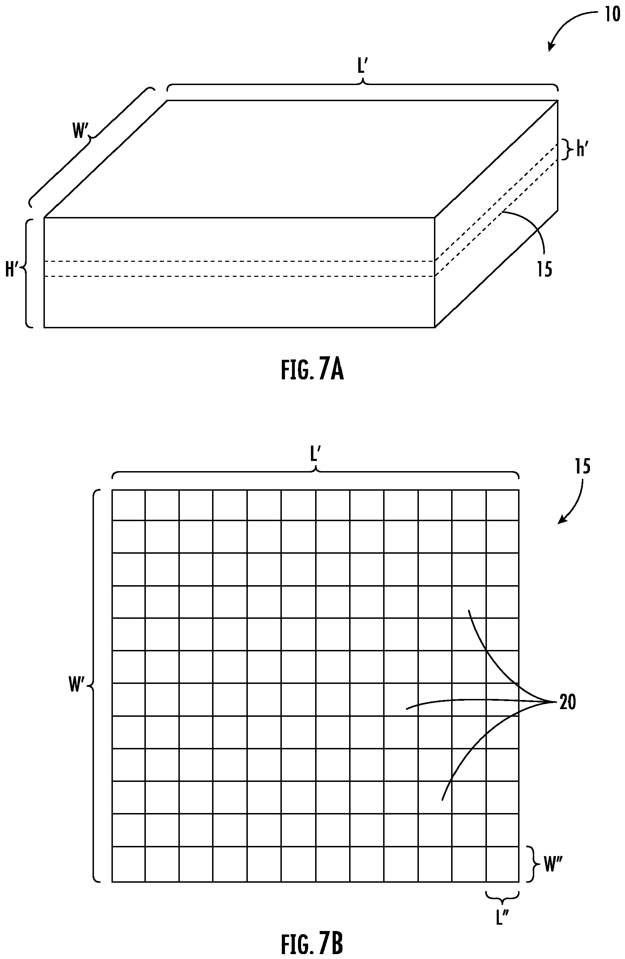

As discussed above, the produced glass bodies in the embodiments disclosed herein comprise uniform concentrations of OH (and OD). Furthermore, in embodiments, the produced glass bodies comprise relatively low concentrations of OH (and OD). For purposes of the present disclosure, the OH (and OD) concentration was measured by segmenting the produced glass body into a plurality of segments and measuring the OH (and OD) concentration of each segment, as discussed below with reference to FIGS. 7A through 7C. FIG. 7A shows a glass body 10 produced by the process 100 of FIG. 1. Thus, body 10 is the resultant body after the annealing step 150 of process 100. Body 10 may be an ingot or a substrate to which one or more layers are applied in downstream processing.

As discussed above, body 10 is $TiO_2$-$SiO_2$ glass. The $SiO_2$ concentration in body 10 may be about 80 wt.% or more, or about 85 wt.% or more, or about 90 wt.% or more, or about 92 wt.% or more, or about 95 wt.% or more, or about 97 wt.% or more, or about 98 wt.% or more, or about 99 wt.% or more, or from about 85 wt.% to about 97 wt.%, or from about 90 wt.% to about 95 wt.%. The $TiO_2$ concentration in body 10 may be from about 1.0 wt.% to about 15.0 wt.%, or from about 6.0 wt.% to about 12.0 wt.%, or from about 6.0 wt.% to about 8.5 wt.%, or from about 6.0 wt.% to about 8.0 wt.%, or from about 6.0 wt.% to about 7.5 wt.%, or from about 6.0 wt.% to about 7.0 wt.%, or about 6.0 wt.% to about 6.8 wt.%, or about 6.0 wt.% to about 6.5 wt.%, or about 6.5 wt.% to about 7.5 wt.%, or about 6.5 wt.% to about 7.0 wt.%.

Body 10 has a length L', a width W', and a height H', as shown in FIG. 7A. In some embodiments, each of the length L' and the width W is greater than the height H'. For example, the length L' and the width W' may each be about 500 mm or less, or about 450 mm or less, or about 400 mm or less, or about 350 mm or less, or about 300 mm or less, or about 250 mm or less, or about 200 mm or less, or about 150 mm or less, or about 100 mm or less, or about 75 mm or less, or about 50 mm or less, or about 25 mm or less, or about 20 mm or less, or about 15 mm or less. Additionally or alternatively the length L' and width W' of glass body 10 are each about 15 mm or greater, or about 20 mm or greater, or about 25 mm or greater, or about 50 mm or greater, or about 75 mm or greater, or about 100 mm or greater, or about 150 mm or greater, or about 200 mm or greater, or about 250 mm or greater, or about 300 mm or greater, or about 350 mm or greater, or about 400 mm or greater, or about 450 mm or greater, or about 500 mm or greater. In some embodiments, both the length L' and the width W' are about 150 mm, or about 152 mm, or about 179 mm. However, it is also contemplated that the length L' can be different from the width in some embodiments.

Furthermore, the height H' may be smaller than each of the length L' and the width W'. In some embodiments, the height H' is about 400 mm or less, or about 350 mm or less, or about 300 mm or less, or about 250 mm or less, or about 200 mm or less, or about 150 mm or less, or about 100 mm or less, or about 75 mm or less, or about 50 mm or less, or about 25 mm or less, or about 20 mm or less, or about 15 mm or less, or about 10 mm or less, or about 5 mm or less. Additionally or alternatively, the height H' is about 5 mm or greater, or about 10 mm or greater, or about 15 mm or greater, or about 20 mm or greater, or about 25 mm or greater, or about 50 mm or greater, or about 75 mm or greater, or about 100 mm or greater, or about 150 mm or greater, or about 200 mm or greater, or about 250 mm or greater, or about 300 mm or greater, or about 350 mm or greater, or about 400 mm or greater. In some embodiments, the height H' is about 63 mm, or about 150 mm, or about 152 mm.

As also discussed above, body 10 may be sliced into a plurality of samples. FIG. 7A shows an exemplary sample 15 of body 10 that forms a sub-portion of the body along the smallest dimension (i.e., the characteristic length $L_c$) of body 10. Each sample 15 may also be considered to be a body or a substrate or a wafer. In the embodiment of FIG. 7A, the height H' is less than each of the length L' and the width W' so that the height H' is the smallest dimension. Thus, the height h' of sample 15 extends along the height H' of body 10. In the embodiment of FIG. 7A, body 10 comprises multiple samples along its height H'. However, it is also contemplated in other embodiments, that one sample 15 extends along the entire height H' of body 10 (or along the entire smallest dimension of body if the smallest dimension is not the height H'). In these embodiments, body 10 only comprises one sample 15 such that the one sample 15 forms the entire body 10.

Although FIG. 7A depicts body 10 and sample 15 as being square components with flat surfaces, it is also contemplated in embodiments that body 10 and/or sample 15 comprise other shapes. For example, the outer profile of body 10 and/or sample 15 can be circular or elliptical or a non-symmetrical shape. Furthermore, body 10 and/or sample 15 can be curved forming a concave or convex structure. In one exemplary embodiment, body 10 is formed of a single sample 15 (such that the single sample 15 extends for the entire length, width, and height of body 10) and body 10 has a concave structure. Sample 15 may be a reticle, photomask, mirror, and/or a photomask holder.

Each sample 15 has substantially uniform OH, OD, and $TiO_2$ concentrations across the length and width of the sample. In order to determine the uniformity of the samples in a body, each sample is divided into segments across the length and width of the sample. For example, FIG. 7B shows sample 15 divided into segments 20 across the cross-sectional length L' and width W' of sample 15. The concentration of one or more components (e.g., OH, OD, $TiO_2$) may

be then determined for each segment 20 in order to determine the uniformity of each of these components along sample 15. For example, the concentration of OH may be measured for each segment 20 in order to determine the OH concentration uniformity across the cross-section of sample 15. As discussed further below, the concentration of the one or more components is determined through the full thickness h' of each segment 20.

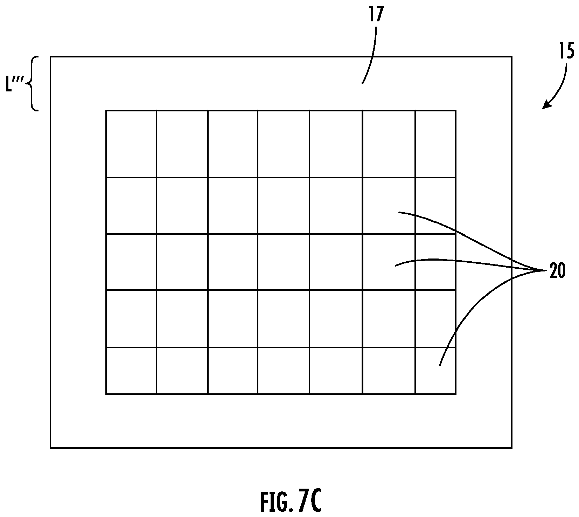

Although FIG. 7B shows segments 20 as extending along the entire length L' and width W' of sample 15, it is also contemplated that the portion of sample 15 that comprises segments 20 may be less than the entire cross-sectional length L' and width W'. For example, as shown in FIG. 7C, sample 15 may comprise an outer, peripheral lip 17 upon which segments 20 are not formed. Therefore, outer, peripheral lip 17 may be a clearance between the end of segments 20 and the outer edge of sample 15. In embodiments, the outer, peripheral lip may extend for a length L''' from about 2 mm to about 20 mm, or about 4 mm to about 16 mm, or about 5 mm to about 16 mm, or about 8 mm to about 14 mm, or about 10 mm to about 12 mm. In some embodiments, the length L''' is about 12.5 mm or about 12.7 mm.

Segments 20 may be adjacent segments across a specific length and width of sample 15 (such that no gaps are formed between the adjacent segments). As discussed above, this specific length and width (across which all the segments 20 extend) may be equal to or less than the length L' and width W' of sample 15. In embodiments, segments 20 are adjacent segments across a length and width (across which all the segments 20 extend) of sample 15 such that the length and width are each about 25 mm or greater, or about 30 mm or greater, or about 40 mm or greater or about 50 mm or greater, or about 60 mm or greater, or about 75 mm or greater, or about 100 mm or greater, or about 125 mm or greater, or about 150 mm or greater, or about 175 mm or greater, or about 180 mm or greater, or about 190 mm or greater, or about 200 mm or greater, or about 250 mm or greater.

When sample 15 comprises a flat surface, segments 20 are formed along the flat planar surface, as shown in FIG. 7B. However, when sample 15 comprises a concave or convex surface, segments 20 are formed along the curving surface of sample 15.

As shown in FIG. 7B, each segment 20 has a length L" and a width W" that are each about 12.7 mm. However, it is also contemplated in other embodiments that the length L" is not equal to the width W". It is also noted that in some embodiments, the length L" and the width W" of segments 20 may be equal to the length L''' of peripheral lip 17.

The height of each segment 20 is the height h' of sample 15, as discussed above. Therefore, in embodiments, the height h' is about 7.62 mm.

As discussed above, the concentration of one or more components may be determined within each segment 20. Therefore, for example, the concentration of OH may be determined for each adjacent segment 20 within sample 15. When each segment 20 has a length and width of 12.7 mm, the concentration of the components is determined at a frequency of 12.7 mm across the cross-section of sample 15. For example, the concentration of OH is measured at a frequency of 12.7 mm across the cross-section of sample 15.

The concentration of OH (and OD) for each segment 20 is measured using Fourier transform infrared spectroscopy ("FTIR") in transmission. As used herein, "in transmission" means that the light is directed through the glass body to be measured to determine the OH or OD concentration (rather than using light that is reflected from the body to be measured to determine the OH or OD concentration). Therefore, "in transmission" requires a non-scattering surface. Once sample 15 is loaded into the FTIR for measurement, a beam alignment and background measurement may be performed first. Then the FTIR measures the fundamental absorption peak for OH or OD, which measures the peak height with respect to the background signal, the background signal being a straight line between the points surrounding the absorption peak. The absorption peak height is then divided by the thickness h' of sample 15 to yield an absorption coefficient $\beta_{OH}$. The OH concentration is then derived from the absorption coefficient $\beta_{OH}$ using the equation:

$$C = \beta_{OH} / \varepsilon \; x \; MW_{OH} / D_{glass} \; x106$$

where C is the concentration of OH in ppm for a particular segment 20, $\beta_{OH}$ is the absorption coefficient of the glass, $\varepsilon$ is the molar absorptivity of OH for the absorption peak at a wavenumber of 3670 cm$^{-1}$, MWon is the molecular weight of hydroxyl (g/mol), and $D_{glass}$ is the density of the glass (g/cm$^3$). It is noted that the same equation may be used to determine the OD concentration. The above-disclosed FTIR analysis is further disclosed in K.M. Davis, et al, "Quantitative infrared spectroscopic measurement of hydroxyl concentration in silica glass," J. Non-Crystalline Solids, 203 (1996) 27-36, which is incorporated by reference herein. As discussed above, the OH (or OD) concentration is measured for each segment 20 of sample 15 and is measured through the full thickness h' of each segment 20. The OH (or OD) concentration measurement is then repeated over all segments 20 of sample 15.

One or more segments 20 may have a different concentration of OH (and OD) from one or more other segments 20. However, in embodiments, segments 20 each have substantially the same concentration of OH (and OD) regardless of where the segment is located on substate 10.

Furthermore, an average OH (or OD) concentration along the length L' and width' of sample 15 may be determined by averaging together the OH (or OD) concentrations of the individual segments 20. According to the embodiments disclosed herein, the average OH (and/or OD) concentration of the entirety of sample 15 may be in a range from about 0 ppm to about 100 ppm, or about 1 ppm to about 80 ppm, or about 2 ppm to about 60 ppm, or about 3 ppm to about 50 ppm, or about 4 ppm to about 40 ppm, or about 5 ppm to about 30 ppm, or about 1 ppm to about 25 ppm, or about 1 ppm to about 20 ppm, or about 1 ppm to about 15 ppm, or about 1 ppm to about 10 ppm, or about 1 ppm to about 8 ppm, or about 1 ppm to about 5 ppm. In some embodiments, the average OH (and/or OD) concentration of the entirety of sample 15 is about 10 ppm or less, or about 8 ppm or less, or about 6 ppm or less, or about 5 ppm or less, or about 4 ppm or less, or about 3 ppm or less, or about 2 ppm or less, or about 1 ppm or less.

In some particular embodiments, the maximum OH (and/or OD) concentration among segments 20 may be in a range from about 1 ppm to about 100 ppm, or from about 2 ppm to about 80 ppm, or from about 3 ppm to about 50 ppm, or about 10 ppm to about 40 ppm, or about 10 ppm to about 20 ppm, or about 3 ppm to about 20 ppm, or about 3 ppm to about 15 ppm, or about 3 ppm to about 10 ppm, or about 3 ppm to about 5 ppm. The minimum OH (and/or OD) concentration among segments 20, in some particular embodiments, may be about 5 ppm or less, or about 4 ppm or less, or about 3 ppm or less, or about 2 ppm or less, or about 1 ppm or less, or about 0 ppm.

The difference between the highest concentration and the lowest concentration of OH (or OD) among the different segments 20 is the peak-to-valley (P-V) OH concentration. More specifically, the segment 20 with the highest OH concentration is compared with the segment 20 with the lowest OH concentration. Then, the difference between the highest and lowest OH concentrations is calculated. This difference between the highest concentration and the lowest concentration in a sample 15 is referred to as the P-V difference in concentration. The lower the P-V difference, the more uniform the concentration is in a particular sample.

The P-V difference of OH (and/or OD) concentration of segments 20 in sample 15, when produced with process 100, may be about 60 ppm or less, or about 50 ppm or less, or about 40 ppm or less, or about 30 ppm or less, or about 20 ppm or less, or about 10 ppm or less, or about 9 ppm or less, or about 8 ppm or less, or about 7 ppm or less, or about 6 ppm or less, or about 5 ppm or less, or about 4 ppm or less, or about 3 ppm or less, or about 2 ppm or less, or about 1 ppm or less, or about 0 ppm or less. In embodiments, the P-V difference of OH (and/or OD) concentration of segments 20 in sample 15 is in a range from about 0 ppm to about 60 ppm, or about 0 ppm to about 50 ppm, or about 0 ppm to about 40 ppm, or about 0 ppm to about 30 ppm, or about 0 ppm to about 20 ppm, or about 0 ppm to about 10 ppm, or about 1 ppm to about 30 ppm, or about 1 ppm to about 25 ppm, or about 1 ppm to about 20 ppm, or about 1 ppm to about 15 ppm, or about 1 ppm to about 5 ppm, or about 1 ppm to about 3 ppm, or about 3 ppm to about 10 ppm, or about 5 ppm to about 10 ppm.

As discussed above, the P-V difference of OH concentration among segments 20 is very low, thus providing a homogenous and uniform glass body 10. Due to such low P-V differences, glass body 10 will maintain its figure in an EUV system. Furthermore, in embodiments, the OH concentration among segments 20 is also very low. As discussed above, the lower OH concentrations disclosed herein contribute to producing glass bodies with lower CTE values. Such uniform and low OH concentrations were achieved, in the embodiments of the present disclosure, using little to no halides.

An average concentration of $TiO_2$ among segments 20, when produced with process 100 as disclosed herein, may be from about 1.0 wt.% to about 15.0 wt.%, or from about 6.0 wt.% to about 12.0 wt.%, or from about 6.0 wt.% to about 8.5 wt.%, or from about 6.0 wt.% to about 8.0 wt.%, or from about 6.0 wt.% to about 7.5 wt.%, or from about 6.0 wt.% to about 7.0 wt.%, or about 6.0 wt.% to about 6.8 wt.%, or about 6.0 wt.% to about 6.5 wt.%, or about 6.5 wt.% to about 7.5 wt.%, or about 6.5 wt.% to about 7.0 wt.%, as disclosed above.

Furthermore, an average $Ti^{3+}$ concentration among segments 20, when produced with process 100 as disclosed herein, is about 100 ppm or less, or 90 ppm or less, or about 80 ppm or less, or about 70 ppm or less, or about 60 ppm or less, or about 50 ppm or less, or about 40 ppm or less, or about 30 ppm or less, or about 20 ppm or less, or about 15 ppm or less, or about 10 ppm or less, or about 5 ppm or less.

The P-V difference of $TiO_2$ concentration of segments 20 in sample 15, when produced with process 100 as disclosed herein, may be about 0.0200 wt.% or less, or about 0.01500 wt.% or less, or about 0.0100 wt.% or less, or about 0.0090 wt.% or less, or about 0.0080 wt.% or less, or about 0.0070 wt.% or less, or about 0.0060 wt.% or less, or about 0050 wt.% or less, or about 0.0040 wt.% or less, or about 0.0035 wt.% or less, or about 0.0030 wt.% or less, or about 0.0025 wt.% or less, or about 0.0020 wt.% or less, or about 0.0015 wt.% or less, or about 0.0010 wt.% or less. In embodiments, the P-V difference of $TiO_2$ concentration of segments 20 is in range from about 0.0010 wt.% to about 0.0050 wt.%, or about 0.0015 wt.% to about 0.0045 wt.%, or about 0.0020 wt.% to about 0.0040 wt.%, or about 0.0025 wt.% to about 0.0035 wt.%, or about 0.0030 wt.% to about 0.0050 wt.%, or about 0.0010 wt.% to about 0.0030 wt.%, or about 0.0010 wt.% to about 0.0025 wt.%, or about 0.0010 wt.% to about 0.0020 wt.%, or about 0.0100 wt.% to about 0.0500 wt.%, or about 0.0100 wt.% to about 0.0400 wt.%, or about 0.0100 wt.% to about 0.0300 wt.%. The P-V difference of $TiO_2$ concentration in glass body 10 is very low, thus embodiments disclosed herein produce a homogenous glass body 10 with not only a uniform concentration of OH but also of $TiO_2$.

The concentration of $TiO_2$ of each segment 20 is calculated based upon the measured refractive index of each segment 20. As in well-known in the art, the concentration of $TiO_2$ in a glass body correlates to the refractive index of the glass body. Therefore, for purposes of the present disclosure, refractive index is measured in order to determine the

TiO$_2$ concentration of the glass bodies disclosed herein. More specifically, an optical interferometer operating at a wavelength of 633 nm is used to measure the refractive index. In particular, the optical interferometer is a Zygo Verifire HD from Zygo Corporation with a 270 micron pixel size resolution and operating at a wavelength of 633 nm. The optical interferometer is set so that the pixels are square with a size of 270 microns $\times$ 270 microns, and each pixel extends through the full thickness h' of sample 15. The refractive index is measured at each pixel within a segment 20 and through the full thickness of the pixel. The refractive indexes, which were each measured for each pixel within a segment 20, are then averaged together to determine the average refractive index of each segment 20. The refractive index measurement is then repeated over all segments 20 of sample 15.

The average TiO$_2$ concentration of each segment 20 is then determined based upon the average refractive index of each segment 20 using the following relationship:

$$55 \text{ ppm RI} = 0.0125\% \text{ C}_{\text{Ti}}$$

were RI is the average refractive index of each segment 20 and C$_{\text{Ti}}$ is the average concentration of TiO$_2$ (in wt.%) of each segment 20. It is noted that the above relationship assumes that the only influence on the change of refractive index is from TiO$_2$.

Furthermore, the average CTE of each segment 20 is determined from the average refractive index of each segment 20 using the following relationship:

$$55 \text{ ppm RI} = 1 \text{ ppb/K CTE}$$

were RI is the average refractive index of each segment 20 and CTE is the average coefficient of thermal expansion (in ppb/K) of each segment 20. It is noted that the above relationship assumes that the only influence on the change of refractive index is from CTE.

Additionally, the Tzc of each segment 20 is determined from the CTE of each segment 20 using the following relationship:

$$\Delta\text{CTE} / \text{CTE slope} = \Delta\text{Tzc}$$

where $\Delta$CTE is the deviation of CTE for a particular segment 20 as compared to the average CTE of all the segments 20 (in ppb/K), CTE slope is the slope of CTE of all the segments 20 as a function of temperature (in ppb/K$^2$), and $\Delta$Tzc is the deviation of Tzc for the particular segment 20 as compared to the average Tzc of all the segments 20 (°C). It is noted that the above relationship assumes that the only influence on the change of Tzc is from CTE.

The P-V difference of refractive index of segments 20 across sample 15 may be about $1\times10^{-4}$ or less, or about $5\times10^{-5}$ or less, or about $1\times10^{-5}$ or less, or about $5\times10^{-6}$ or less, or about $1\times10^{-6}$ or less, or about $5\times10^{-7}$ or less, or about $1\times10^{-7}$ or less, or from about $1\times10^{-6}$ to about $1\times10^{-4}$, or about $6\times10^{-6}$ to about $9\times10^{-5}$, or about $10\times10^{-6}$ to about $6\times10^{-5}$, or about $1\times10^{-6}$ to about $1\times10^{-5}$, or about $1\times10^{-5}$ to about $1\times10^{-4}$. The distribution of refractive index within a glass substrate is an indicator of the TiO$_2$ concentration distribution of that glass substrate. Therefore, a glass substrate with a smaller P-V difference in refractive index will also have a smaller P-V difference of TiO$_2$. As discussed above, a smaller P-V difference of TiO$_2$ allows the glass substrate to be more uniformly polished.

Furthermore, glass body 10, when produced with process 100 as disclosed herein, has ultralow expansion properties that make the glass body suitable for use with EUV lithography applications. In embodiments, glass body 10 comprises a CTE value at 20°C in a range from -45 ppb/K to +20 ppb/K, or a CTE value at 20 °C of -45 ppb/K, -40 ppb/K, -35 ppb/K, -30 ppb/K, -25 ppb/K, -20 ppb/K, -15 ppb/K, -10 ppb/K, -5 ppb/K, 0 ppb/K, +5 ppb/K, +10 ppb/K, +15 ppb/K, +20 ppb/K, or within any range bounded by any two of those values (e.g., -40 ppb/K to -25 ppb/K, -15 ppb/K to +15 ppb/K, etc.). Such ultralow CTE values at room temperature allow the shape of the glass body 10, whether formed into a mirror or a photomask (such as a reflective mask), to remain substantially constant upon heating, during the EUV lithography process.

In embodiments, glass body 10, when produced with process 100 as disclosed herein, comprises a crossover temperature (Tzc) in a range from about 10°C to about 60°C, or from about 20°C to about 38°C, or from about 22°C to about 38°C. In embodiments, the glass body 400 comprises a crossover temperature (Tzc) of about 20°C to about 60°C, or from about 25°C to about 55°C, or from about 30°C to about 50°C, or from about 35°C to about 45°C, or from about 40°C to about 45°C, or from about 20°C to about 45°C, or from about 20°C to about 40°C, or from about 10°C to about 50°C. The crossover temperature is the temperature at which the CTE of the glass body 10 is exactly zero. When glass body 10 is utilized in EUV lithography applications, the crossover temperature is ideally within the temperatures that the glass body is expected to experience, in order to minimize thermal expansion of the glass substrate during the lithography process. Designers of EUV lithography systems calculate an optimum crossover temperature for each glass body 10 in the system, based on the thermal load, size, and heat removal rates afforded by the system. The crossover temperature of glass body 10 is additionally determined by the technique disclosed in U.S. Patent No. 10,458,936, which is incorporated by reference herein.

Furthermore, glass body 10, when produced with process 100 as disclosed herein, has a slope of CTE at 20 °C in a range from about 1.0 ppb/$K^2$ to about 2.5 ppb/$K^2$, or about 1.15 ppb/$K^2$ to about 2.0 ppb/$K^2$, or about 1.2 ppb/$K^2$ to about 1.9 ppb/$K^2$, or about 1.3 ppb/$K^2$ to about 1.7 ppb/$K^2$, or about 1.6 ppb/$K^2$ to about 2.2 ppb/$K^2$ or about 1.7 ppb/$K^2$ to about 2.0 ppb/$K^2$, or about 1.8 ppb/$K^2$ to about 1.9 ppb/$K^2$. The slope of CTE of glass body 10 is the rate of change of the CTE of the glass body 400 as a function of the temperature of the glass body 400. When glass body 10 is utilized in EUV lithography applications, the slope of CTE is ideally minimized so that the glass body experiences minimal thermal expansion caused by fluctuations in the temperature of the glass body during the EUV lithography process. CTE slope is additionally measured by the technique disclosed in aforementioned U.S. Patent No. 10,458,936.

In embodiments, glass body 10, when produced with process 100 as disclosed herein, comprises a fictive temperature (Tf) of about 900°C or greater, or about 910°C or greater, or about 915°C or greater, or about 920°C or greater, or about 925°C or greater, or about 930°C or greater, or about 940°C or greater, or about 950°C or greater, or about 960°C or greater, or about 970°C or greater, or about 980°C or greater. Additionally or alternatively, glass body 10, when produced with process 100 as disclosed herein, comprises a fictive temperature (Tf) of about 1500°C or less or about 1400°C or less, or about 1200°C or less, or about 1100°C or less, or about 1000°C or less, or about 900°C or less.

In the embodiments disclosed herein, glass body 10, when produced with process 100 as disclosed herein, has a halogen content of about 100 ppm or less, or about 75 ppm or less, or about 50 ppm or less, or about 30 ppm or less, or about 25 ppm or less, or about 20 ppm or less, or about 15 ppm or less, or about 10 ppm or less, or about 5 ppm or less, or about 2.5 ppm or less, or about 2 ppm or less, or about 1 ppm or less, or about 0.5 ppm or less, or about 0.2 ppm or less, or about 0.1 ppm or less. In particular, in the embodiments disclosed herein, glass body 10, when produced with process 100 as disclosed herein, has a chlorine content of about 100 ppm or less, or about 75 ppm or less, or about 50 ppm or less, or about 30 ppm or less, or about 25 ppm or less, or about 20 ppm or less, or about 15 ppm or less, or about 10 ppm or less, or about 5 ppm or less, or about 2.5 ppm or less, or about 2 ppm or less, or about 1 ppm or less, or about 0.5 ppm or less, or about 0.2 ppm or less, or about 0.1 ppm or less.

Glass body 10, when produced with process 100 as disclosed herein, may be a homogeneous glass with reduced or no striae. Striae are periodic inhomogeneities in glass that can adversely affect properties of glass. More specifically, striae are formed by alternating thin layers of material in glass with different CTE values. Process 100, as discussed above, forms glass substrates with homogeneous CTE values throughout and, therefore, forms glass substrates with reduced or no striae.

Due to the low striae content in glass body 10, the glass body can be polished to a very low surface waviness. Polishing glass with striae results in unequal removal of the glass material. For example, a first layer of glass material with a first CTE value may polish at a faster rate than a second layer of glass material with a second CTE value. In this example, the different CTE values in the layers of glass material be the result of striae in the glass. Furthermore, in this example, the first layer may be removed from the glass at a faster rate than the second layer is removed from the glass, even when both layers are exposed to the same polishing process. Therefore, in this example, the glass will have an unequal removal of material when polishing the first and second layers. Such unequal removal of material results in suboptimal surface waviness after the polishing process. In contrast to this example, glass body 10 is produced to have homogeneous CTE values throughout the glass body. Therefore, glass body 10 may be polished to have a superior surface waviness.

Three exemplary glass bodies were produced using process 100 with the specific consolidation steps of process 300 of FIG. 3. The first glass sample comprised a CTE slope at 20 °C of 1.987 ppb/$K^2$ and a crossover temperature (Tzc) of 34.91°C. The second glass sample comprised a CTE slope at 20 °C of 1.942 ppb/$K^2$ and a crossover temperature (Tzc) of 34.39 °C. The third glass sample comprised a CTE slope at 20 °C of 2.012 ppb/$K^2$ and a crossover temperature (Tzc) of 34.40 °C. The average CTE slope of the three glass samples was 1.98 ppb/$K^2$ with a standard deviation of 0.04. The average Tzc of the three glass samples was 34.57 °C with a standard deviation of 0.30.

The uniform and homogeneous glass bodies produced herein have reduced radiation damage when exposed to lasers. When a $SiO_2$ article is exposed to radiation from short wavelength lasers operating in the UV, deep UV (DUV), and vacuum UV wavelengths, the radiation causes damage in a region of the article. Such laser include, but are not limited to, those operating at about 248 nm, 193 nm, 157 nm, 13.5 nm, and even shorter wavelengths. One consequence of such radiation-induced damage is polarization-induced birefringence (PIB). As used herein, the term polarization-induced birefringence refers to the numerical difference between the peak measured birefringence level in the center portion of the area of the glass exposed to a polarized laser beam after a certain time interval or number of laser pulses and the initial birefringence of the glass before exposure to radiation.

The PIB level of the glass body is induced by directing a linearly polarized pulsed laser beam having a wavelength of approximately 193 nm and a beam diameter of about 3 mm with a given fluence (expressed in $\mu J \cdot cm^{-2} \cdot pulse^{-1}$) and pulse length (typically on the order of tens of nanoseconds) to a fixed area of the glass body. The measured birefringence at the center portion of the exposed area is measured after a certain number of pulses. The PIB value is then calculated by subtracting the initial birefringence of the glass from the measured center birefrin-gence. The relationship between polarization-induced birefringence, pulse number, and fluence can tentatively be described as $PIB = a \cdot N \cdot F$ with a being a sample-dependent factor, N being the number of pulses, F being the fluence, and PIB being the level of polarization-induced birefringence.

In one embodiment, the glass body exhibits a polarization induced birefringence of less than about 1 mn/cm, when subjected to 5 billion pulses of a laser beam operating at about 193 nm, the laser beam having a fluence of about 500 $\mu J \cdot cm^{-2} \cdot pulse^{-1}$, and a pulse length of about 21 ns. In a particular embodiment, the glass body has a polarization induced birefringence of less than about 0.5 nm/cm over an area of at least 25 $cm^2$.

Another result of such radiation induced damage to the glass body is wavefront distortion (WFD). Simply stated, wavefront distortion may be described as the distortion of a wavefront from its original or intended shape as it travels through an optical component. Such distortion is caused by deviations or inhomogeneities within the glass body. WFD is often characterized by the peak-to-valley (P-V) deformation of the emergent wavefront from its intended shape and is normally expressed in fractions of a wavelength. Such wavefront distortion may be induced when radiation by a laser or other light source creates inhomogeneities in physical properties such as, for example, density of the glass body, by exposure to light, such as a laser (hence the terms light induced wavefront distortion and laser induced wave-front distortion (LIWFD).

In one embodiment, the glass body exhibits a light or laser induced wavefront distortion, measured at a wavelength of 633 nm, of less than about 3.0 nm/cm, when subjected to 5 billion pulses of a laser beam operating at about 193 nm, the laser beam having a fluence of about 500 $\mu J \cdot cm^{-2} \cdot pulse^{-1}$ and a pulse length of about 21 ns.

According to a first aspect, a glass body comprising titania and silica, wherein an average hydroxyl concentration amongst a plurality of segments of the glass body is about 60 ppm or less, the hydroxyl concentration being measured using a Fourier transform infrared spectroscopy in transmission, and the plurality of segments including every adjacent segment across a length and a width of the glass body, the length being about 25 mm or more and the width being about 25 mm or more, and the glass body comprising a chlorine concentration of about 5 ppm or less.

According to a second aspect, the glass body of the first aspect, wherein the concentration of chlorine is about 1 ppm or less.

According to a third aspect, the glass body of the first aspect, wherein the glass body comprises a halogen concentration of about 5 ppm or less.

According to a fourth aspect, the glass body of the first aspect, wherein the average hydroxyl concentration amongst the plurality of segments of the glass body is about 20 ppm or less.

According to a fifth aspect, the glass body of the fourth aspect, wherein the average hydroxyl concentration amongst the plurality of segments of the glass body is about 5 ppm or less.

According to a sixth aspect, the glass body of the first aspect, wherein a peak-to-valley of hydroxyl concentration amongst the plurality of segments is about 5 ppm or less.

According to a seventh aspect, the glass body of the sixth aspect, wherein the peak-to-valley of hydroxyl concentration amongst the plurality of segments is about 2 ppm or less.

According to an eight aspect, the glass body of the seventh aspect, wherein the peak-to-valley of hydroxyl concentration amongst the plurality of segments is about 1 ppm or less.

According to a ninth aspect, the glass body of the first aspect, wherein an average titania concentration amongst the plurality of segments of the glass body is from about 6.0 wt.% to about 8.0 wt.%.

According to a tenth aspect, the glass body of the ninth aspect, wherein the average titania concentration amongst the plurality of segments of the glass body is from about 7.0 wt.% to about 8.0 wt.%.

According to an eleventh aspect, the glass body of the first aspect, wherein a peak-to-valley of titania concentration amongst the plurality of segments is from about 0.0010 wt.% to about 0.0050 wt.%.

According to a twelfth aspect, the glass body of the first aspect, wherein a peak-to-valley of titania concentration amongst the plurality of segments is from about 0.0100 wt.% to about 0.0500 wt.%.

According to a thirteenth aspect, the glass body of the first aspect, wherein a peak-to-valley of refractive index amongst the plurality of segments of the glass body is about $1 \times 10^{-5}$ or less.

According to a fourteenth aspect, the glass body of the thirteenth aspect, wherein the peak-to-valley of refractive index amongst the plurality of segments of the glass body is from about $1 \times 10^{-6}$ to about $1 \times 10^{-4}$.

According to a fifteenth aspect, the glass body of the first aspect, wherein the glass body comprises a crossover temperature (Tzc) of about 20°C to about 60°C.

According to a sixteenth aspect, the glass body of the first aspect, wherein the length is about 50 mm or more and the width is about 50 mm or more.

According to a seventeenth aspect, the glass body of the sixteenth aspect, wherein the length is about 150 mm or more and the width is about 150 mm or more.

According to an eighteenth aspect, the glass body according to the first aspect, wherein each segment has a length (L") and a width (W") that are each about 12.7 mm.

According to a nineteenth aspect, the glass body according to the first aspect, wherein the glass body is a photomask.

According to a twentieth aspect, a method comprising pressing titania-doped silica soot to form a molded soot body such that the titania-doped silica soot has a density of about 0.50 $g/cm^3$ or greater, preferably about 0.65 $g/cm^3$ or greater, consolidating the molded soot body by heating the molded soot body, and annealing the consolidated glass body, wherein the consolidated and annealed glass body comprises a chlorine concentration of about 100 ppm or less, preferably about 5 ppm or less.

According to a twenty-first aspect, the method of the twentieth aspect, wherein consolidating the molded soot body comprises flowing a CO-containing gas within a consolidation furnace while heating the molded soot body to a first temperature ($T_1$).

According to a twenty-second aspect, the method of the twenty-first aspect, further comprising increasing the temperature from the first temperature ($T_1$) to a second temperature ($T_2$) at a rate of about 10°C/hour or greater, the second temperature ($T_2$) being greater than the first temperature ($T_1$).

According to a twenty-third aspect, the method of the twenty-second aspect, wherein the first temperature ($T_1$) is from about 900°C to about 1300°C and the second temperature ($T_2$) is from about 1100°C to about 1500°C.

According to a twenty-fourth aspect, the method of the twentieth aspect, wherein consolidating the molded soot body comprises flowing an $O_2$-containing gas and/or a $CO_2$-containing gas within a consolidation furnace comprised of graphite while heating the molded soot body to a first temperature ($T_1$).

According to a twenty-fifth aspect, the method of the twentieth aspect, wherein the titania-doped silica soot comprises carbon and consolidating the molded soot body further comprises flowing an $O_2$-containing gas and/or a $CO_2$-containing gas within a consolidation furnace while heating the molded soot body to a first temperature ($T_1$).

According to a twenty-sixth aspect, the method of the twentieth aspect, wherein consolidating the molded soot body comprises flowing a halogen and $O_2$-containing gas within a consolidation furnace while heating the molded soot body to a first temperature ($T_1$), a ratio (X)

of a partial pressure of halogen in the gas to a partial pressure of $O_2$ in the gas being defined by:

$$X = [\text{Partial Pressure of Halogen}]^2/[\text{Partial Pressure of O}_2]$$

wherein X is from about $5 \times 10^{-6}$ atm to about 1.0 atm and the partial pressure of the halogen and of $O_2$ are each in units of atm.

According to a twenty-seventh aspect, the method of the twenty-sixth aspect, wherein X is from about $1 \times 10^{-5}$ atm to about 0.5 atm.

According to a twenty-eighth aspect, the method of the twentieth aspect, wherein annealing the consolidated glass body comprises heating the consolidated glass body to a first fictivation temperature ($T_{1f}$) such that the consolidated glass body has a viscosity of less than about $10^{13}$ poise followed by equilibrating the consolidated glass body at the first fictivation temperature ($T_{1f}$) for a predetermined time period and then quenching the consolidated glass body to a second fictivation temperature ($T_{2f}$).

According to a twenty-ninth aspect, the method of the twenty-eighth aspect, wherein the first fictivation temperature ($T_{1f}$) is about 825°C or greater.

According to a thirtieth aspect, the method of the twenty-ninth aspect, wherein the first fictivation temperature ($T_{1f}$) is about 900°C or greater.

According to a thirty-first aspect, the method of the twenty-eighth aspect, wherein the second fictivation temperature ($T_{2f}$) is from about 25°C to about 600°C.

According to a thirty-second aspect, the method of the twenty-eighth aspect, wherein the predetermined time period is about 12 hours or greater.

According to a thirty-third aspect, the method of the twentieth aspect, wherein the concentration of chlorine is about 1 ppm or less.

According to a thirty-fourth aspect, the method of the twentieth aspect, wherein the consolidated and annealed glass body comprises a halogen concentration of about 5 ppm or less.

According to a thirty-fifth aspect, the method of the twentieth aspect, wherein an average hydroxyl concentration amongst a plurality of segments of the consolidated and annealed glass body is about 100 ppm or less, such as about 0 ppm to about 100 ppm, preferably about 60 ppm or less, the hydroxyl concentration being measured using a Fourier transform infrared spectroscopy in transmission, and the plurality of segments including every adjacent segment across a length and a width of the glass body, the length being about 25 mm or more and the width being about 25 mm or more.

According to a thirty-sixth aspect, the method of the thirty-fifth aspect, wherein the average hydroxyl concentration amongst the plurality of segments of the glass body is about 10 ppm or less.

According to a thirty-seventh aspect, the method of the thirty-fifth aspect, wherein a peak-to-valley of hydroxyl concentration amongst the plurality of segments is about 5 ppm or less.

It will be apparent to those skilled in the art that various modifications and variations can be made to embodiments of the present disclosure without departing from the spirit and scope of the disclosure. Thus, it is intended that the present disclosure cover such modifications and variations provided they come within the scope of the appended claims and their equivalents.

**Claims**

1. A method comprising:

   pressing titania-doped silica soot to form a molded soot body such that the titania-doped silica soot has a density of about 0.50 g/cm$^3$ or greater;
   consolidating the molded soot body by heating the molded soot body; and
   annealing the consolidated glass body,
   wherein the consolidated and annealed glass body comprises a chlorine concentration of about 100 ppm or less, and
   wherein an average hydroxyl concentration amongst a plurality of segments of the consolidated and annealed glass body is about 100 ppm or less, such as about 0 ppm to about 100 ppm, the hydroxyl concentration being measured using a Fourier transform infrared spectroscopy in transmission, and the plurality of segments including every adjacent segment across a length and a width of the glass body, the length being about 25 mm or more and the width being about 25 mm or more.

2. Method according to claim 1 comprising:

   pressing titania-doped silica soot to form a molded soot body such that the titania-doped silica soot has a density of about 0.65 g/cm$^3$ or greater;

   consolidating the molded soot body by heating the molded soot body; and
   annealing the consolidated glass body,

   wherein the consolidated and annealed glass body comprises a chlorine concentration of about 5 ppm or less, and wherein an average hydroxyl concentration amongst a plurality of segments of the consolidated and annealed glass body is about 60 ppm or less, the hydroxyl concentration being measured using a Fourier transform infrared spectroscopy in transmission, and the plurality of segments including every adjacent segment across a length and a width of the glass body, the length being about 25 mm or more and the width being about 25 mm or more.

3. The method of claim 1 or 2, wherein consolidating the molded soot body comprises flowing a CO-containing gas within a consolidation furnace while heating the molded soot body to a first temperature ($T_1$).

4. The method of claim 3, further comprising increasing the temperature from the first temperature ($T_1$) to a second temperature ($T_2$) at a rate of about 10°C/hour or greater, the second temperature ($T_2$) being greater than the first temperature ($T_1$).

5. The method of claim 4, wherein the first temperature ($T_1$) is from about 900°C to about 1300°C and the second temperature ($T_2$) is from about 1100°C to about 1500°C.

6. The method of claim 1 or 2, wherein consolidating the molded soot body comprises flowing an $O_2$-containing gas and/or a $CO_2$-containing gas within a consolidation furnace comprised of graphite while heating the molded soot body to a first temperature ($T_1$).

7. The method of claim 1 or 2, wherein the titania-doped silica soot comprises carbon and consolidating the molded soot body further comprises flowing an $O_2$-containing gas and/or a $CO_2$-containing gas within a consolidation furnace while heating the molded soot body to a first temperature ($T_1$).

8. The method of claim 1 or 2, wherein consolidating the molded soot body comprises flowing a halogen and $O_2$-containing gas within a consolidation furnace while heating the molded soot body to a first temperature ($T_1$), a ratio (X) of a partial pressure of halogen in the gas to a partial pressure of $O_2$ in the gas being defined by:

$$X = [\text{Partial Pressure of Halogen}]^2/[\text{Partial Pressure of } O_2]$$

wherein X is from about $5 \times 10^{-6}$ atm to about 1.0 atm and the partial pressure of the halogen and of $O_2$ are each in units of atm.

9. The method of any one of claims 1-8, wherein annealing the consolidated glass body comprises heating the consolidated glass body to a first fictivation temperature ($T_{1f}$) such that the consolidated glass body has a viscosity of less than about $10^{13}$ poise followed by equilibrating the consolidated glass body at the first fictivation temperature ($T_{1f}$) for a predetermined time period and then quenching the consolidated glass body to a second fictivation temperature ($T_{2f}$), wherein the first fictivation temperature ($T_{1f}$) preferably is about 825°C or greater, more preferably about 900°C or greater.

10. The method of claim 9, wherein the second fictivation temperature ($T_{2f}$) is from about 25°C to about 600°C.

11. The method of any one of claim 9 or 10, wherein the predetermined time period is about 12 hours or greater.

12. The method of any one of claims 1-11, wherein the concentration of chlorine is about 1 ppm or less.

13. The method of any one of claims 1-12, wherein the consolidated and annealed glass body comprises a halogen concentration of about 5 ppm or less.

14. The method of claim 1, wherein the average hydroxyl concentration amongst the plurality of segments of the glass body is about 10 ppm or less.

15. The method of claim 1, wherein a peak-to-valley of hydroxyl concentration amongst the plurality of segments is about 5 ppm or less.

*100*

```
┌─────────────────────────────┐
│     PRODUCE SOOT PARTICLES   │
│             110              │
└─────────────────────────────┘
               │
               ▼
┌─────────────────────────────┐
│     FORM MOLDED SOOT BODY    │
│             120              │
└─────────────────────────────┘
               │
               ▼
┌─────────────────────────────┐
│  CONSOLIDATE THE MOLDED SOOT │
│             BODY             │
│             130              │
└─────────────────────────────┘
               │
               ▼
┌─────────────────────────────┐
│     REMELT THE GLASS BODY    │
│             140              │
└─────────────────────────────┘
               │
               ▼
┌─────────────────────────────┐
│     ANNEAL THE GLASS BODY    │
│             150              │
└─────────────────────────────┘
```

FIG. 1

200

242

226

248

244

270

272    272    272

264'   264'   264'

252    252

254

236

220    224    222

232    234    230

264

260

**FIG. 2A**

H

L

**FIG. 2B**

H

L

**FIG. 2C**

300

```
┌─────────────────────────────────┐
│   CARBON MONOXIDE DRYING OF      │
│          SOOT BODY               │
│            310                   │
└─────────────────────────────────┘
                │
                ▼
┌─────────────────────────────────┐
│   PURGING OF CARBON MONOXIDE     │
│            320                   │
└─────────────────────────────────┘
                │
                ▼
┌─────────────────────────────────┐
│      OXIDIZING OF SOOT BODY      │
│            330                   │
└─────────────────────────────────┘
                │
                ▼
┌─────────────────────────────────┐
│    DENSIFICATION OF SOOT BODY    │
│            340                   │
└─────────────────────────────────┘
```

FIG. 3

EP 4 477 629 A1

400

DRYING OF SOOT BODY IN
GRAPHITE FURNACE
410

PURGING OF CARBON MONOXIDE
420

DENSIFICATION OF SOOT BODY
430

FIG. 4

23

500

```
┌─────────────────────────────────┐
│      DRYING OF SOOT BODY         │
│      COMPRISING CARBON           │
│              510                 │
└─────────────────────────────────┘
                 │
                 ▼
┌─────────────────────────────────┐
│   PURGING OF CARBON MONOXIDE     │
│              520                 │
└─────────────────────────────────┘
                 │
                 ▼
┌─────────────────────────────────┐
│      OXIDIZING OF SOOT BODY      │
│              530                 │
└─────────────────────────────────┘
                 │
                 ▼
┌─────────────────────────────────┐
│    DENSIFICATION OF SOOT BODY    │
│              540                 │
└─────────────────────────────────┘
```

FIG. 5

600

```
┌─────────────────────────────────┐
│  HALOGEN AND OXYGEN DRYING OF    │
│          SOOT BODY               │
│            610                   │
└─────────────────────────────────┘
                │
                ▼
┌─────────────────────────────────┐
│  PURGING OF HALOGEN AND OXYGEN-  │
│        CONTAINING GAS            │
│            620                   │
└─────────────────────────────────┘
                │
                ▼
┌─────────────────────────────────┐
│    DENSIFICATION OF SOOT BODY    │
│            630                   │
└─────────────────────────────────┘
```

FIG. 6

FIG. 7A

FIG. 7B

**FIG. 7C**

Europäisches
Patentamt

European
Patent Office

Office européen
des brevets

# EUROPEAN SEARCH REPORT

**Application Number**

EP 24 18 1035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2016/185645 A1 (OCHS STEFAN [DE] ET AL) 30 June 2016 (2016-06-30) * column 9, lines 16-39 * ----- | 1-3,5-15 | INV. C03C3/06 C03B1/00 |
| Y | US 8 012 653 B2 (ASAHI GLASS CO LTD [JP]) 6 September 2011 (2011-09-06) * paragraph [0002] * * paragraphs [0046] - [0049]; example 1 * ----- | 1-11, 13-15 | ADD. G03F7/00 |
| Y | US 2022/250964 A1 (CAMPION MICHAEL JOHN [US] ET AL) 11 August 2022 (2022-08-11) * paragraph [0087] * ----- | 1-15 | |

**TECHNICAL FIELDS SEARCHED       (IPC)**

C03C
C03B
G03F

The present search report has been drawn up for all claims

| Place of search | Date of completion of the search | Examiner |
|---|---|---|
| Munich | 16 September 2024 | Saldamli, Saltuk |

EPO FORM 1503 03.82 (P04C01)

## ANNEX TO THE EUROPEAN SEARCH REPORT
## ON EUROPEAN PATENT APPLICATION NO.

EP 24 18 1035

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2024

| Patent document cited in search report | | Publication date | Patent family member(s) | | Publication date |
|---|---|---|---|---|---|
| US 2016185645 | A1 | 30-06-2016 | CN 105431388 | A | 23-03-2016 |
| | | | DE 102013108885 | B3 | 07-08-2014 |
| | | | EP 3033306 | A1 | 22-06-2016 |
| | | | JP 6423434 | B2 | 14-11-2018 |
| | | | JP 2016531828 | A | 13-10-2016 |
| | | | KR 20160043022 | A | 20-04-2016 |
| | | | TW 201509838 | A | 16-03-2015 |
| | | | US 2016185645 | A1 | 30-06-2016 |
| | | | WO 2015022152 | A1 | 19-02-2015 |
| US 8012653 | B2 | 06-09-2011 | JP 5676718 | B2 | 25-02-2015 |
| | | | JP 2010135732 | A | 17-06-2010 |
| | | | JP 2014033221 | A | 20-02-2014 |
| | | | US 2010028787 | A1 | 04-02-2010 |
| US 2022250964 | A1 | 11-08-2022 | EP 4039660 | A1 | 10-08-2022 |
| | | | JP 2024507486 | A | 20-02-2024 |
| | | | KR 20230145104 | A | 17-10-2023 |
| | | | US 2022250964 | A1 | 11-08-2022 |
| | | | WO 2022173592 | A1 | 18-08-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10458936 B

**Non-patent literature cited in the description**

- **K.M. DAVIS et al.** Quantitative infrared spectroscopic measurement of hydroxyl concentration in silica glass. *J. Non-Crystalline Solids,* 1996, vol. 203, 27-36